# EUROPEAN PATENT APPLICATION

(11) **EP 4 535 275 A1**
(43) Date of publication of application: **09.04.2025**
(21) Application number: 23815789.5
(22) Date of filing: 17.05.2023
(51) Int. Cl.: G06Q 50/10

(54) **INFORMATION PROCESSING DEVICE AND INFORMATION PROCESSING METHOD**

(30) Priority: 02.06.2022 JP 2022090029
(71) Applicant: Micware Co., Ltd., Kobe-shi, Hyogo 650-0035 (JP)
(72) Inventor: NARUSHIMA Kenji, Kobe-shi, Hyogo 650-0035 (JP)
(74) Representative: Hasegawa, Kan
(86) International application number: PCT/JP2023/018438
(87) International publication number: WO 2023/234030

(57) **Abstract**

Known techniques cannot perform appropriate processing for the right holders of videos captured with mobile terminals. An information processor (1) includes a video obtainer (133), a video transmitter (141), and a right holder processor (134). The video obtainer (133) obtains, of videos captured with two or more mobile terminals, a video captured with and transmitted from one of the mobile terminals (2). Each video is associated with a right holder identifier and an attribute value set including one or more pieces of environment information including location information specifying a location at which the video is captured. The video transmitter (141) transmits the video obtained by the video obtainer (133) to a user terminal (3). The right holder processor (134) performs a right holder process for a right holder identified by the right holder identifier associated with the video. The information processor (1) can perform appropriate processing for the right holders of videos captured with mobile terminals.

## Description

### BACKGROUND OF INVENTION

### Field of the Invention

The present invention relates to an information processor and other techniques for processing videos captured with mobile terminals.

### Background Art

An image storage device and an image recording method are available for recording videos or still images captured with an in-vehicle camera. A criminal investigation supplemental system then uses such images recorded in the image storage device (refer to Patent Literature 1).

### CITATION LIST

### PATENT LITERATURE

Patent Literature 1: Japanese Unexamined Patent Application Publication No. 2009-60477

### SUMMARY OF INVENTION

### TECHNICAL PROBLEM

However, such known techniques cannot perform appropriate processing for the right holders of videos captured with mobile terminals.

### SOLUTION TO PROBLEM

An information processor according to a first aspect of the present invention includes a video obtainer, a video transmitter, and a right holder processor. The video obtainer obtains, of videos captured with two or more mobile terminals, a video captured with and transmitted from a mobile terminal of the two or more mobile terminals. Each of the videos is associated with an attribute value set and a right holder identifier. The attribute value set includes one or more pieces of environment information. The environment information includes location information specifying a location at which the video is captured. The video transmitter transmits the video obtained by the video obtainer to a user terminal. The right holder processor performs a right holder process for a right holder identified by the right holder identifier associated with the video.

The above structure allows appropriate processing for the right holder of a video captured with a mobile terminal.

An information processor according to a second aspect is the information processor according to the first aspect, in which the video obtainer obtains a video satisfying an accumulation condition.

The above structure allows appropriate processing for the right holder of a video satisfying an accumulation condition.

An information processor according to a third aspect is the information processor according to the second aspect, further including an inquiry receiver that receives, from the user terminal, an inquiry about environment information about environments in which the videos are captured with the two or more mobile terminals. The obtainer obtains a video corresponding to the inquiry.

The above structure allows appropriate processing for the right holder of a video corresponding to an inquiry from a user.

An information processor according to a fourth aspect is the information processor according to the second aspect, in which the video obtainer obtains a video associated with an attribute value set satisfying a preservation condition from a mobile terminal of the two or more mobile terminals.

The above structure allows appropriate processing for the right holder of a video satisfying a preservation condition.

An information processor according to a fifth aspect is the information processor according to any one of the first to fourth aspects, in which the right holder processor includes a rewarding unit that rewards the right holder identified by the right holder identifier associated with the video transmitted by the video transmitter.

The above structure can reward the right holder of a video captured with a mobile terminal.

An information processor according to a sixth aspect is the information processor according to the third aspect, in which the right holder processor includes a changer that changes the right holder of the video identified by the right holder identifier associated with the video to a user of the user terminal.

The above structure can change the right information indicating the right holder of a video captured with a mobile terminal.

An information processor according to a seventh aspect is the information processor according to the sixth aspect, in which the changer adds a user identifier identifying the user of the user terminal in a manner associated with the right holder identifier associated with the video transmitted by the video transmitter.

The above structure can manage the history of right holder changes of a video captured with a mobile terminal.

An information processor according to an eighth aspect is the information processor according to the third aspect, in which in response to the inquiry receiver receiving the inquiry, the video obtainer obtains the video corresponding to the inquiry from the mobile terminal, and the right holder processor includes a first preserver that accumulates the video obtained by the video obtainer in a manner associated with the attribute value set.

The above structure can preserve used videos.

An information processor according to a ninth aspect is the information processor according to the fourth aspect, in which the video obtainer obtains the video associated with the attribute value set satisfying the preservation condition from the mobile terminal, and the right holder processor includes a second preserver that accumulates the video obtained by the video obtainer in a manner associated with the attribute value set.

The above structure can preserve a video satisfying the preservation condition.

An information processor according to a tenth aspect is the information processor according to the seventh aspect or the eighth aspect, in which the right holder processor includes a third preserver that accumulates preservation information onto a blockchain, and the preservation information includes access information for accessing accumulated videos.

The above structure can preserve management information for a video to be preserved.

An information processor according to an eleventh aspect is the information processor according to any one of the first to tenth aspects, in which the attribute value set includes one or more tags specifying features in the video.

The above structure can associate, with a video, an attribute value set including tags specifying the features in the video.

An information processor according to a twelfth aspect is the information processor according to the third aspect, further including a set storage that stores the attribute value set in a manner associated with one or more terminal identifiers identifying each of the two or more mobile terminals. The video obtainer refers to the set storage, determines a video corresponding to the inquiry, and obtains the video from a mobile terminal of the two or more mobile terminals.

The above structure can search for a requested video using the attribute value sets of videos stored in the information processor and can determine the requested video promptly.

An information processor according to a thirteenth aspect is the information processor according to the twelfth aspect, in which the video obtainer refers to the set storage, determines a video corresponding to the inquiry, determines whether the video is transmittable from a mobile terminal of the two or more mobile terminals, and obtains the video from the mobile terminal in response to the video being transmittable. The information processor further includes a state transmitter that transmits, in response to the video obtainer determining that the video is not transmittable, state information indicating that the video is not transmittable to the user terminal.

When a mobile terminal possesses a video requested by a user, but is in a state of being unable to transmit the video, the above structure can notify the user that the mobile terminal is in the state of being unable to transmit the video.

An information processor according to a fourteenth aspect is the information processor according to the twelfth aspect, in which the video obtainer refers to the set storage, determines a video corresponding to the inquiry, determines whether the video is transmittable from a mobile terminal of the two or more mobile terminals, and obtains the video from the mobile terminal in response to the video being transmittable. The information processor further includes a request transmitter that transmits, in response to the video obtainer determining that the video is not transmittable, request information indicating a request for the video to a user corresponding to the video.

When a mobile terminal possesses a video requested by a user, but is in a state of being unable to transmit the video, the above structure can notify the user, such as the right holder of the video, of the request for the video.

An information processor according to a fifteenth aspect is the information processor according to the twelfth aspect, further including a set receiver that receives the attribute value set from each of the two or more mobile terminals at an end of movement of the mobile terminal, and a set accumulator that accumulates the attribute value set received by the set receiver into the set storage.

The above structure can receive and accumulate the latest attribute value set of a video at the end of movement of a mobile terminal.

An information processor according to a sixteenth aspect is the information processor according to the third aspect, further including a movement information receiver that receives, at a start of movement of each of the two or more mobile terminals, movement information specifying the movement of the mobile terminal from the mobile terminal, and a movement information accumulator that accumulates the movement information received by the movement information receiver in a manner associated with the mobile terminal. The video obtainer obtains a video corresponding to the inquiry among videos captured with at least one of the two or more mobile terminals corresponding to the movement information.

The above structure can perform a process for obtaining a video from a mobile terminal in the state of being able to transmit the video.

A mobile terminal according to a seventeenth aspect includes an image capturer that captures a video, a mobile video transmitter that transmits the video to an information processor, and a movement information transmitter that transmits, to the information processor, movement information specifying movement of the mobile terminal at a start of the movement.

The above structure can transmit, at the start of movement of a mobile terminal, the movement information specifying the movement of the mobile terminal to the information processor.

A mobile terminal according to an eighteenth aspect includes a mobile storage that stores an attribute value set including one or more pieces of environment information including location information specifying a location at which a video is captured, an image capturer that captures a video, a terminal accumulator that obtains the attribute value set while the image capturer is capturing the video and accumulates the attribute value set into the mobile storage in a manner associated with the video, and a set transmitter that transmits the attribute value set in the terminal storage to an information processor at an end of movement of the mobile terminal.

The above structure can transmit, at the end of movement of a mobile terminal, the attribute value set of a video stored in the mobile terminal to the information processor.

A mobile terminal according to a nineteenth aspect is the mobile terminal according to the seventeenth aspect or the eighteenth aspect, further including a tag obtainer that obtains one or more tags for the video captured with the image capturer and associates the one or more tags with the video.

The above structure can automatically obtain a tag for a video captured with each mobile terminal.

### ADVANTAGEOUS EFFECTS

The information processor according to the aspects of the present invention can perform appropriate processing for the right holders of videos captured with mobile terminals.

### BRIEF DESCRIPTION OF THE DRAWINGS

FIG. 1 is a schematic diagram of an information system A according to a first embodiment.
FIG. 2 is a block diagram of the information system A.
FIG. 3 is a block diagram of an information processor 1 according to the first embodiment.
FIG. 4 is a flowchart of an operation example of the information processor 1.
FIG. 5 is a flowchart of an example process of obtaining an attribute value set in the first embodiment.
FIG. 6 is a flowchart of an example process of obtaining a movable body attribute value tag in the first embodiment.
FIG. 7 is a flowchart of an example process of obtaining a video tag in the first embodiment.
FIG. 8 is a flowchart of an example third preservation process in the first embodiment.
FIG. 9 is a flowchart of an example of a registered video search process in the first embodiment.
FIG. 10 is a flowchart of a first example of an unregistered video search process in the first embodiment.
FIG. 11 is a flowchart of a second example of the unregistered video search process in the first embodiment.
FIG. 12 is a flowchart of an example process of responding to an inquiry in the first embodiment.
FIG. 13 is a flowchart of an example rewarding process in the first embodiment.
FIG. 14 is a flowchart of an operation example of a mobile terminal 2 in the first embodiment.
FIG. 15 is a flowchart of an example process of transmitting a video in the first embodiment.
FIG. 16 is a flowchart of an example process of obtaining a terminal video in the first embodiment.
FIG. 17 is a flowchart of an operation example of a user terminal 3 in the first embodiment.
FIG. 18 is a flowchart of an example process of generating an inquiry in the first embodiment.
FIG. 19 is a terminal management table in the first embodiment.
FIG. 20 is a registered video management table in the first embodiment.
FIG. 21 is a tag condition management table in the first embodiment.
FIG. 22 is a preservation condition management table in the first embodiment.
FIG. 23 is a schematic external view of a computer system in the first embodiment.
FIG. 24 is a block diagram of the computer system.

### DETAILED DESCRIPTION

An information processor and other techniques according to one or more embodiments will be described below with reference to the drawings. Components denoted with the same reference numerals in one or more embodiments perform the same operation, and thus may not be described repeatedly.

### First Embodiment

An information processor according to the present embodiment obtains and accumulates, of videos captured with two or more mobile terminals, a video satisfying an accumulation condition. The videos are each associated with an attribute value set and an identifier of the right holder of the captured video. The attribute value set includes one or more pieces of environment information including location information specifying the location at which the video is captured.

The information processor according to the present embodiment described below receives an inquiry about environment information from a user terminal, obtains a video corresponding to the inquiry, provides the video to the user terminal, and performs a predetermined process for the video provided. The predetermined process is, for example, a rewarding process, a change process, a first preservation process, a second preservation process, or a third preservation process (described later).

The information processor according to the present embodiment automatically receives and accumulates a video satisfying a preservation condition from a mobile terminal.

The information processor according to the present embodiment manages videos each having one or more tags applied after, for example, analysis of the video. The tags are applied by, for example, the information processor or a mobile terminal, but may be applied by another device.

The information processor according to the present embodiment performs, for a video intended by the user that is not transmittable, a process for the user of the mobile terminal or a user who requests the video. When the video is not transmittable, the power of the mobile terminal may be off, for example.

The information processor according to the present embodiment receives movement information indicating the start of movement from each mobile terminal, and uses the movement information.

Each mobile terminal according to the present embodiment transmits the movement information to the information processor.

The mobile terminal according to the present embodiment transmits the latest attribute value set of a captured video to the information processor at the end of its movement.

The mobile terminal according to the present embodiment obtains one or more tags by, for example, analyzing a video and associates the tags to the video.

In the present embodiment, information X associated with information Y indicates that the information Y can be obtained from the information X or that the information X can be obtained from the information Y. The information X may be associated with the information Y in any manner. The information X and the information Y may be linked with each other or may be in the same buffer. The information X may be included in the information Y. The information Y may be included in the information X.

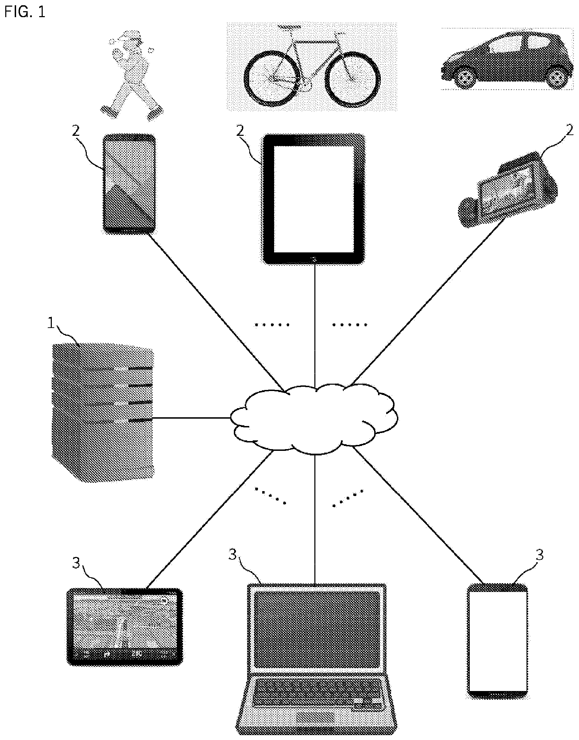

FIG. 1 is a schematic diagram of an information system A according to the present embodiment. The information system A includes an information processor 1, one or more mobile terminals 2, and one or more user terminals 3.

The information processor 1 is a server that provides videos transmitted from the mobile terminals 2 to the user terminals 3. The information processor 1 may be any processor such as a cloud server or an application service provider (ASP) server. The information processor 1 may include a blockchain.

The videos in this example are images captured with the mobile terminals 2. Each video is normally a set of two or more still images, but may be a single still image. Two or more still images in each video may be captured at any interval. For example, each video includes 60 or 30 frames per second, but may be a set of two or more still images captured at an interval longer than or equal to a predetermined time (e.g., one minute) or a set of two or more still images captured when a predetermined condition is satisfied.

Each mobile terminal 2 is installed in a movable body and captures videos. The movable body is a body that is movable. The movable body is, for example, an automobile, a two-wheeled vehicle, a bicycle, a ship or boat, an airplane, a person, or an animal. Each mobile terminal 2 is, for example, a drive recorder, a smartphone, a tablet, or a camera with a communication capability. Being installed normally indicates being fastened, but may also indicate being in contact or held. Each mobile terminal 2 may include a drive such as an engine or transportation elements such as wheels.

Each user terminal 3 is used by a user. The user is a person who views or requests videos. The user terminals 3 may function as the mobile terminals 2. More specifically, each user terminal 3 may be a terminal of the user who provides a video.

The mobile terminals 2 and the user terminals 3 may be any devices such as navigation terminals, smartphones, tablets, or personal computers.

The information processor 1 and each mobile terminal 2 can communicate with each other through a network such as the Internet. The information processor 1 and each user terminal 3 can communicate with each other through a network such as the Internet.

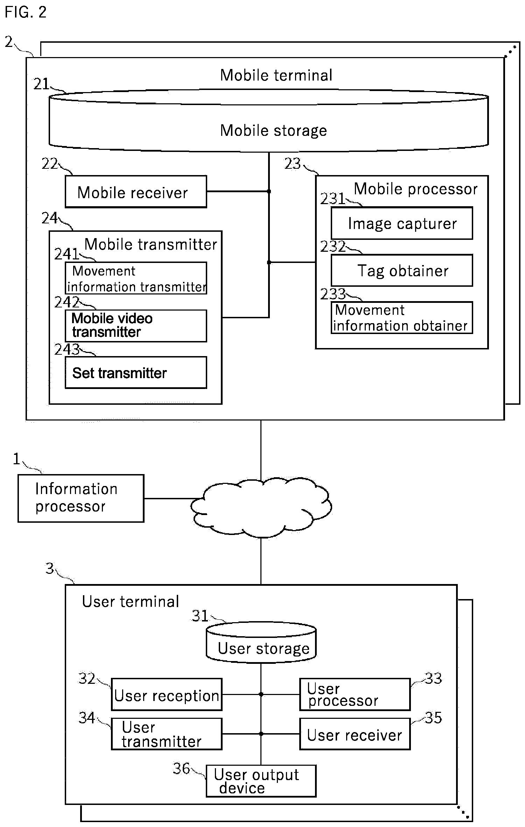

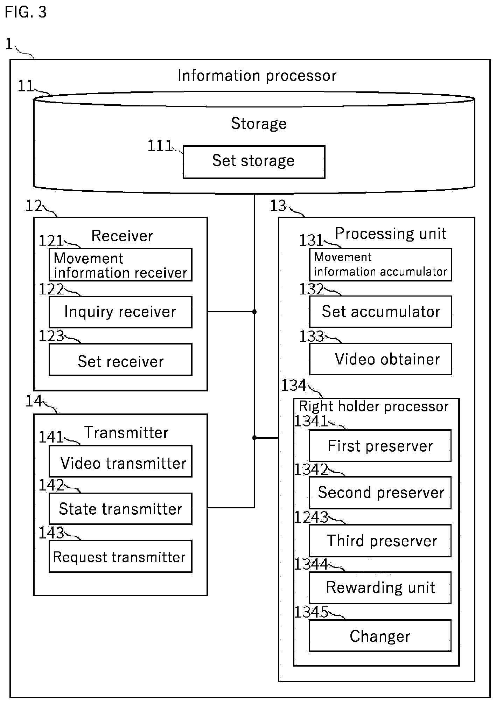

FIG. 2 is a block diagram of the information system A according to the present embodiment. FIG. 3 is a block diagram of the information processor 1.

The information processor 1 includes a storage 11, a receiver 12, a processing unit 13, and a transmitter 14. The storage 11 includes a set storage 111. The receiver 12 includes a movement information receiver 121, an inquiry receiver 122, and a set receiver 123. The processing unit 13 includes a movement information accumulator 131, a set accumulator 132, a video obtainer 133, and a right holder processor 134. The right holder processor 134 includes a first preserver 1341, a second preserver 1342, a third preserver 1343, a rewarding unit 1344, and a changer 1345. The transmitter 14 includes a video transmitter 141, a state transmitter 142, and a request transmitter 143.

Each mobile terminal 2 includes a mobile storage 21, a mobile receiver 22, a mobile processor 23, and a mobile transmitter 24. The mobile processor 23 includes an image capturer 231, a tag obtainer 232, and a movement information obtainer 233. The mobile transmitter 24 includes a movement information transmitter 241, a mobile video transmitter 242, and a set transmitter 243.

Each user terminal 3 includes a user storage 31, a user reception 32, a user processor 33, a user transmitter 34, a user receiver 35, and a user output device 36.

The storage 11 included in the information processor 1 stores various items of information. Various items of information include, for example, terminal information, an attribute value set (described later), movement information (described later), and videos.

The set storage 111 stores one or more pieces of terminal information. The terminal information is information about the mobile terminals 2. The terminal information includes a terminal identifier and an attribute value set. The terminal information may be associated with a video. The terminal identifier may be included in the attribute value set.

The terminal identifier is information identifying each mobile terminal 2. The terminal identifier may be a right holder identifier identifying the right holder who is the user of each mobile terminal 2. The terminal identifier is, for example, identification (ID) of each mobile terminal 2, the name of each mobile terminal 2, or the media access control (MAC) address of each mobile terminal 2. The right holder is an initial right holder of a video. The right holder is normally the owner of the mobile terminal 2, but may be any person who has the right to the captured video.

The right holder identifier is an identifier of the right holder of a video. The right holder identifier may be a terminal identifier. The right holder identifier is, for example, the ID, the name, the mail address, or the telephone number of a right holder. The right holder is a person who has any right to the video. The right holder is, for example, the owner of the video, the copyright owner of the video, or the owner of the mobile terminal 2 used to capture the video.

The attribute value set is a set of one or more video attribute values. The video attribute values are attribute values of a video. The video attribute values are, for example, environment information. The video attribute values are, for example, tags. The video attribute values may be, for example, movable body attribute values (described later).

The environment information is information about the environment in which a video is captured. The environment information is, for example, location information, time information, weather information, temperature information, or season information. The location information specifies the location at which the video is captured. For example, the location information includes latitude and longitude or includes latitude, longitude, and altitude. The location information may be, for example, an area identifier specifying an area on a map, a road identifier specifying an address or a road, or a traffic-lane identifier specifying a traffic lane on a road. The time information specifies the time at which the video is captured. The time information is, for example, time, a set of year, month, day, and hour, a set of year, month, day, hour, and minute, a set of year, month, day, hour, minute, and second, a set of year, month, and day, or a set of month and day. More specifically, the time information may indicate time with any granularity. The weather information specifies the whether at the time when and at the location where the video is captured. The weather information is, for example, sunny, rainy, snowy, or cloudy. The temperature information specifies the outside temperature at the time when and at the location where the video is captured. The temperature information is, for example, 25 degrees or 30 degrees or higher. The season information specifies the season when the video is captured at the location at which the video is captured. The season information is, for example, spring, summer, early summer, or winter.

The tag is information specifying the features in the video. The tag is, for example, information resulting from analysis of the video. The analysis of the video may be analysis of still images included in the video. The tag is, for example, information resulting from analysis of one or more movable body attribute values. The tag is, for example, information resulting from analysis of two or more time-series movable body attribute values.

The movable body attribute value is an attribute value about a movable body. The movable body attribute value is information about movement and is obtainable during, for example, movement of a movable body. The movable body attribute value is, for example, information indicating use of controller area network (CAN) data or an airbag. The CAN data indicates, for example, the speed, the revolutions per minute of the engine, and the state of a brake. The tag indicates, for example, an accident, a traffic jam, dangerous driving, or an overspeed.

The receiver 12 receives various items of information and instructions from the mobile terminals 2 or the user terminals 3. The various items of information and instructions are, for example, movement information, inquiries, attribute value sets, or videos.

The movement information receiver 121 receives movement information from the mobile terminals 2 at the start of movement of the mobile terminals 2. The start may be the moment immediately after the start of movement, but may be a predetermined time after the start of movement.

The movement information is information specifying movement of the mobile terminals 2. The information specifying movement may specify the start of movement. The movement in this example may be upcoming movement or ongoing movement. The movement information is, for example, a movement start flag. The movement information is, for example, a movement start flag and a terminal identifier. The movement start flag is information indicating the start of movement. The terminal identifier is an identifier of any mobile terminal 2 that starts moving. The terminal identifier may be the same as the right holder identifier.

The inquiry receiver 122 receives an inquiry about environment information from any user terminal 3. The inquiry about environment information includes the environment information as a condition. The inquiry is a request for a video captured with a mobile terminal 2. The inquiry is, for example, in a structured query language (SQL), but may be in any form or may have any data structure.

The set receiver 123 receives an attribute value set from each mobile terminal 2. The set receiver 123 may receive an attribute value set from each mobile terminal 2 at the end of movement of the mobile terminal 2. The attribute value set in this example is information specifying a video stored in each mobile terminal 2.

The processing unit 13 performs various processes. For example, the various processes are performed by the movement information accumulator 131, the set accumulator 132, the video obtainer 133, or the right holder processor 134.

The movement information accumulator 131 accumulates the movement information received by the movement information receiver 121 in a manner associated with the corresponding mobile terminal 2. Being associated with the corresponding mobile terminal 2 is, for example, being associated with a right holder identifier.

The set accumulator 132 accumulates the attribute value set received by the set receiver 123 into the set storage 111. The set accumulator 132 normally accumulates the attribute value set in a manner associated with the mobile terminal 2 that has transmitted the attribute value set. Being associated with the mobile terminal 2 is, for example, being associated with a right holder identifier.

The video obtainer 133 obtains videos captured and transmitted by two or more mobile terminals 2. The videos are each associated with an attribute value set and a right holder identifier. The video obtainer 133 may obtain videos satisfying an accumulation condition.

The accumulation condition is a condition for accumulating videos. The accumulation condition is, for example, that an inquiry satisfies a specific condition. The accumulation condition is, for example, that a preservation condition (described later) is satisfied.

The video obtainer 133 obtains, for example, a video corresponding to an inquiry received by the inquiry receiver 122. The video corresponding to an inquiry is a video satisfying a condition included in the inquiry. The video satisfying the condition is a video associated with an attribute value set satisfying a condition on one or more video attribute values.

A device that stores a video to be obtained may be each mobile terminal 2, the information processor 1, or another device (not shown) such as a device included in a blockchain.

For example, when the inquiry receiver 122 receives an inquiry, the video obtainer 133 obtains one or more videos corresponding to the inquiry from the mobile terminals 2. For example, the video obtainer 133 obtains, from the mobile terminals 2, one or more videos paired with an attribute value set satisfying a condition on the environment information included in the inquiry. For example, the video obtainer 133 transmits an inquiry to one or more mobile terminals 2, and receives, from the mobile terminals 2, one or more videos corresponding to the inquiry. This process is referred to as an unregistered video search process. The unregistered video search process is a process of obtaining a video satisfying a condition from unregistered videos stored in the mobile terminals 2. The unregistered video search process is a process of obtaining, for example, a video responding to the inquiry from unregistered videos stored in the mobile terminal 2.

The video obtainer 133 obtains a video corresponding to the inquiry among videos captured with one or more mobile terminals 2 corresponding to the movement information. The video obtainer 133 transmits an inquiry to one or more mobile terminals 2 corresponding to the movement information and receives videos responding to the inquiry from the mobile terminals 2.

When, for example, the inquiry receiver 122 receives an inquiry, the video obtainer 133 determines one or more attribute value sets responding to the inquiry, and obtains a video corresponding to the attribute value sets from the storage 11.

For example, the video obtainer 133 refers to the set storage 111, determines one or more videos corresponding to the inquiry, and obtains the videos from the mobile terminals 2. The process of referring to the set storage 111 and determining a video corresponding to the inquiry is to determine an attribute value set responding to the inquiry among one or more attribute value sets included in the set storage 111. This process is referred to as a registered video search process. The registered video search process is a process of searching registered videos for a video satisfying a condition. The registered video search process is, for example, a process of searching registered videos for a video responding to an inquiry. The registered videos refer to videos on which a first preservation process or a second preservation process (described later) is performed.

For example, the video obtainer 133 refers to the set storage 111, determines a video corresponding to an inquiry, determines whether the video is transmittable from the corresponding mobile terminal 2, and obtains the video from the mobile terminal 2 when the video is transmittable.

The video obtainer 133 determines that the video is transmittable from the mobile terminal 2 when, for example, an attempt to communicate with the mobile terminal 2 allows information reception from the mobile terminal 2. For example, the video obtainer 133 determines whether the movement information corresponding to the mobile terminal 2 is stored in the storage 11, and when the movement information is stored, the video obtainer 133 determines that the video is transmittable from the mobile terminal 2. The video being transmittable refers to, for example, the state in which the power of the mobile terminal 2 or a movable body corresponding to the mobile terminal 2 is on (e.g., the engine of a car as the movable body is on). The video obtainer 133 may determine whether the video is transmittable with any method.

The video obtainer 133 obtains, for example, a video associated with the attribute value set satisfying a preservation condition from the corresponding mobile terminal 2. Through this process, the video can be obtained automatically.

The preservation condition is a condition for accumulating a video. The preservation condition is a condition for an attribute value set.

The preservation condition may be a condition for one or more tags. The preservation condition is, for example, that an attribute value set includes a tag indicating an accident or a tag indicating a traffic jam.

The preservation condition indicates that a video corresponds to an attribute value set satisfying a predetermined condition among the attribute value sets corresponding to one or more videos stored in a predetermined device or an area (e.g., storage 11). The predetermined condition is, for example, that an attribute value included in an attribute value set is not included in the attribute value sets corresponding to one or more videos stored in a predetermined device or an area.

The right holder processor 134 performs a right holder process, or a process for a right holder identified by a right holder identifier associated with a transmitted video. The right holder processor 134 performs, for example, a right holder process, or a process performed in response to transmission of a video from the video transmitter 141 for the right holder identified by the right holder identifier associated with the video. The right holder process is, for example, a first preservation process, a second preservation process, a third preservation process, a rewarding process, or a change process (described later).

For example, the right holder processor 134 accumulates videos obtained by the video obtainer 133 in a manner associated with right holder identifiers. The right holder processor 134 may accumulate only the videos obtained by the video obtainer 133 satisfying an accumulation condition. The right holder processor 134 may not accumulate videos not satisfying an accumulation condition.

For example, when the video obtainer 133 determines that the mobile terminal 2 holding the video corresponding to the inquiry is in the state of being unable to transmit the video, the right holder processor 134 obtains state information about this state.

The state information is about the state in which the video is not transmittable. For example, the state information indicates the state of the mobile terminal 2 possessing a video. The state information indicates, for example, that the video is stored in the mobile terminal 2 but not currently transmittable or that the video is stored in a mobile terminal of Mr. or Ms. X but not currently transmittable. The state information indicates, for example, that the power of the mobile terminal 2 is off or on.

For example, when the video obtainer 133 determines that the mobile terminal 2 holding a video corresponding to the inquiry is in the state of being unable to transmit the video, the right holder processor 134 obtains request information.

The request information indicates a request for a video. The request information indicates, for example, that video XXX is requested by another user or that video XXX is requested by another user for X yen.

The first preserver 1341 performs a first preservation process of accumulating videos obtained by the video obtainer 133. For example, the first preserver 1341 accumulates received videos into the storage 11 in a manner associated with the attribute value sets associated with the videos. The first preservation process is a process of accumulating videos inquired by a user. The first preservation process is a process of preserving videos used by a user. The first preservation process performed on a video allows use of the video after the video is deleted from the mobile terminal 2.

The second preserver 1342 performs a second preservation process of accumulating videos associated with an attribute value set satisfying a preservation condition and obtained by the video obtainer 133. The second preservation process is a process of automatically accumulating videos satisfying a preservation condition. The second preservation process is a process of preserving videos satisfying a preservation condition. The second preservation process performed on a video allows use of the video after the video is deleted from the mobile terminal 2.

The third preserver 1343 performs a third preservation process of accumulating preservation information including access information for accessing accumulated videos. Accumulation of videos and the third preservation process for the preservation information corresponding to the videos may be performed in any order.

The third preserver 1343 may accumulate the preservation information in a blockchain. More specifically, the third preserver 1343 may accumulate the preservation information in a distributed ledger in a blockchain. The third preserver 1343 may register the preservation information as a non-fungible token (NFT). The third preserver 1343 may register the preservation information in a distributed file system in an interplanetary file system (IPFS) network.

The preservation information is used to retain the originality of the video. The preservation information is, in other words, headline information of the video. The preservation information includes, for example, access information and one or more video attribute values. The preservation information may have, for example, one or more right holder identifiers. When the preservation information has two or more right holder identifiers, the video may be shared by right holders, or the two or more right holder identifiers may be right holder history information. The right holder history information is a set of right holder identifiers and information indicating the history of right holder changes. The third preservation process guarantees the originality of the preservation information of the registered video. The guarantee of the originality of the preservation information also guarantees the originality of the video corresponding to the preservation information.

The preservation information may include information (or may be referred to a flag) indicating whether a video is available to a third party. The flag is, for example, information indicating that the video is viewable by a third party, that the video may be for sale, or that the video is neither viewable nor for sale.

The rewarding unit 1344 performs a rewarding process for the right holder identified by the right holder identifier associated with a video transmitted by the video transmitter 141.

The rewarding process is a process of providing a reward. The rewarding process is, for example, a process of increasing points managed in a manner paired with the right holder identifier associated with a video. The rewarding process is, for example, a process of paying money to the right holder identified by the right holder identifier associated with a video. For example, the rewarding process is a process of transmitting a video or another content item to the user terminal 3 of the right holder identified by the right holder identifier associated with a video. The rewarding process is a process of providing any merit to the right holder identified by the right holder identifier associated with a video. The provided reward may be in any form, including money, points, products, and content items.

The changer 1345 performs a change process of changing the right holder of the video from the right holder identified by the right holder identifier associated with the video to the user of the user terminal 3 who has obtained the video based on the inquiry. The change process is a process of changing the right holder of a video.

For example, the changer 1345 adds a user identifier identifying the user of the user terminal 3 in a manner associated with the right holder identifier associated with the video transmitted by the video transmitter 141. Adding the user identifier is equivalent to generating right holder history information indicating the right holder changes over two or more generations.

The transmitter 14 transmits various items of information and instructions to mobile terminals 2 or user terminals 3. The various items of information and instructions include, for example, videos, inquiries, state information, or request information.

The video transmitter 141 transmits a video obtained by the video obtainer 133 to the corresponding user terminal 3. The video transmitter 141 may transmit the video upon receiving an inquiry.

When the video obtainer 133 determines that the video is not transmittable, the state transmitter 142 transmits the state information about the state to the user terminal 3. The state transmitter 142 transmits, for example, the state information obtained by the right holder processor 134 to the user terminal 3.

When the video obtainer 133 determines that the video is not transmittable, the request transmitter 143 transmits the request information indicating a request for the video to the user corresponding to the video. The request transmitter 143 transmits, for example, the request information obtained by the right holder processor 134 to the user corresponding to the video. For example, transmission of the request information to the user corresponding to the video is transmission of the request information with email to the mail address paired with the right holder identifier corresponding to the video. For example, transmission of the request information to the user corresponding to the video is transmission of the request information with short messages to the phone number paired with the right holder identifier corresponding to the video. For example, transmission of the request information to the user corresponding to the video is transmission of the request information to the mobile terminal 2 paired with the right holder identifier corresponding to the video. The user corresponding to the video is typically the right holder of the video.

The mobile storage 21 included in each mobile terminal 2 stores various items of information. The various items of information include, for example, videos, attribute value sets, right holder identifiers, movement information indicating the start of movement, pairs of attribute value tag conditions and tags, pairs of video tag conditions and tags, one or more preservation conditions, or one or more pieces of video-obtaining information. The mobile storage 21 normally stores one or more pairs of attribute value tag conditions and tags. The mobile storage 21 normally stores one or more pairs of video tag conditions and tags.

One or more still images (may be also referred to as fields or frames) included in a video are associated with one or more video attribute values included in an attribute value set.

The attribute value tag condition is a condition for obtaining a tag based on one or more movable body attribute values. The attribute value tag condition is a condition for one or more movable body attribute values. The attribute value tag condition is, for example, that a brake is suddenly applied, that the degree of deacceleration (acceleration) per unit time is lower than or equal to a threshold (a brake is suddenly applied), that an air bag is activated, or that driving at a first speed or lower lasts for a second duration or longer (being in a traffic jam). The tag paired with the attribute value tag condition is, for example, an abnormal driving tag, an accident tag, or a traffic jam tag.

The video tag condition is a condition for a video. The video tag condition is based on the analysis result of the video. The video tag condition is, for example, that the video includes a still image of two or more automobiles colliding with each other (accident), that the number of automobiles within a predetermined distance is greater than or equal to a first threshold for a duration longer than or equal to a second threshold (traffic jam), or that the cumulative value per unit time of a change in the distance between the center of gravity of the preceding car and the traffic lane is greater than or equal to a threshold (erratic driving of the preceding car). The tag paired with the video tag condition is, for example, the abnormal driving tag, the accident tag, or the traffic jam tag.

The preservation condition is a condition for preserving a video. The preservation condition is a condition for an attribute value set. The preservation condition is associated with, for example, video-obtaining information.

The video-obtaining information specifies a video to be obtained. The video-obtaining information specifies a video to be obtained when the preservation condition is satisfied.

The mobile receiver 22 receives various items of information, including, for example, inquiries, request information, and videos captured with other mobile terminals 2.

The mobile processor 23 performs various processes. The various processes include, for example, processes performed by the image capturer 231, the tag obtainer 232, or the movement information obtainer 233. The mobile processor 23 transforms the data structure of the information received by the mobile receiver 22 for output.

The mobile processor 23 detects, for example, the start of movement. The detection of the start of movement is detection of, for example, turning on of the mobile terminal 2 or turning on of the engine of the movable body.

The mobile processor 23 detects, for example, the end of movement. The detection of the end of movement is detection of, for example, turning off of the mobile terminal 2 or turning off of the engine of the movable body.

The mobile processor 23 determines, for example, an attribute value set responding to the inquiry received by the mobile receiver 22 and obtains a video paired with the attribute value set from the mobile storage 21.

The mobile processor 23 obtains, for example, a video of movement from the start to the end of the movement. The mobile processor 23 obtains, for example, a video of movement from the start to the end of the movement in a manner associated with the attribute value set obtained during the movement.

The mobile processor 23 obtains, for example, attribute value sets during video capturing. The mobile processor 23 accumulates the obtained attribute value sets into the mobile storage 21. For example, the mobile processor 23 associates the obtained attribute value sets with the video. Association with the video is normally association with the frames in the video. The attribute value sets and the frames may be synchronized.

The attribute value set is, for example, one or more pieces of environment information. The environment information is, for example, location information, time information, weather information, temperature information, or season information.

The mobile processor 23 obtains, for example, location information during video capturing. For example, the mobile processor 23 that can function as a receiver of the Global Positioning System (GPS) obtains location information. For example, the mobile processor 23 obtains location information continuously, at predetermined intervals, or when an obtaining condition is satisfied. The obtaining condition is a condition for obtaining information. The obtaining condition is, for example, detection of an accident, detection of a traffic jam, or a change in weather information.

The mobile processor 23 obtains, for example, time information from a clock (not shown) during video capturing. For example, the mobile processor 23 obtains time information continuously, at predetermined intervals, or when the obtaining condition is satisfied.

The mobile processor 23 obtains, for example, time information from a clock (not shown) during video capturing, and obtains season information corresponding to the time information.

The mobile processor 23 obtains, for example, weather information during video capturing. The mobile processor 23 obtains, for example, weather information corresponding to the location information from a server (not shown). For example, the mobile processor 23 obtains weather information continuously, at predetermined intervals, or when the obtaining condition is satisfied.

The mobile processor 23 obtains, for example, temperature information during video capturing. The mobile processor 23 obtains, for example, temperature information corresponding to the location information from a server (not shown). The mobile processor 23 obtains, for example, temperature information from a temperature sensor installed in the movable body. For example, the mobile processor 23 obtains temperature information continuously, at predetermined intervals, or when the obtaining condition is satisfied.

The mobile processor 23 determines, for example, whether the obtained attribute value set satisfies the preservation condition. The mobile processor 23 determines, for example, whether the obtained time-series attribute value sets satisfy the preservation condition. When, for example, the attribute value sets satisfy the preservation condition, the mobile processor 23 obtains a video corresponding to the attribute value sets. When, for example, the attribute value sets satisfy the preservation condition, the mobile processor 23 obtains a video corresponding to the preservation condition. When, for example, the attribute value sets satisfy the preservation condition, the mobile processor 23 obtains the video-obtaining information paired with the preservation condition and obtains a video based on the video-obtaining information.

The image capturer 231 captures a video. For example, the image capturer 231 starts video capturing after the start of movement is detected. For example, the image capturer 231 may continue capturing until the end of movement is detected.

The image capturer 231 may accumulate the captured video into the mobile storage 21. The image capturer 231 may overwrite, when accumulating videos into the mobile storage 21 with a limited storage capacity, an area storing old videos with new videos. More specifically, the mobile storage 21 may have a ring buffer structure.

The tag obtainer 232 obtains one or more tags corresponding to the video captured with the image capturer 231 and associates the tags with the video.

For example, the tag obtainer 232 analyzes the video captured with the image capturer 231 and obtains one or more tags corresponding to the video.

The tag obtainer 232 obtains, for example, one or more tags using one or more movable body attribute values obtained during video capturing performed by the image capturer 231. The movable body attribute values are, for example, CAN data.

For example, the tag obtainer 232 determines one or more still images satisfying the video tag condition and obtains a tag paired with the video tag condition. The tag obtainer 232 may associate the tag with the still images. The still images are frames included in the video.

For example, when the video tag conditions are that the number of automobiles at a front-rear interval within a threshold is greater than or equal to a threshold and that the speed of the automobiles is lower than or equal to a threshold and when the tag paired with the video tag conditions is the traffic jam tag, the tag obtainer 232 analyzes frames included in the video, identifies two or more automobiles, and obtains an interval between each pair of the two or more automobiles. The tag obtainer 232 obtains the number of automobiles at the interval within the threshold. The tag obtainer 232 obtains the movement distance of one automobile in two or more frames and the frame rate and obtains the speed of the automobile. The tag obtainer 232 determines whether the video tag condition is satisfied using the number of automobiles at an interval within the threshold and the speed of the automobile. When the video tag conditions are satisfied, the tag obtainer 232 obtains the traffic jam tag paired with the video tag condition. The tag obtainer 232 may associate the traffic jam tag with the analyzed frame in the analyzed video.

For example, the tag obtainer 232 determines one or more movable body attribute values satisfying an attribute value tag condition and obtains the tag paired with the attribute value tag condition. The tag obtainer 232 may associate the tag with a video paired with the movable body attribute values.

For example, when the attribute value tag conditions are that a travel at a speed lower than 30 km lasts for 10 minutes or longer and that the rate of the travel duration at a speed lower than 30% is 80% or higher and when the tag paired with the attribute value tag condition is traffic jam tag, the tag obtainer 232 detects a CAN data piece satisfying the attribute value tag conditions using the history of the speed included in the CAN data associated with each field included in the video, obtains the traffic jam tag paired with the attribute value tag conditions, and associates the tag with the field associated with the detected CAN data piece. The CAN data associated with each field included in the video is the CAN obtained at the same time as when the image of the field is captured.

The movement information obtainer 233 detects movement of the mobile terminal 2, and obtains movement information at the start of the movement. The movement information obtainer 233 obtains, for example, movement information that is the right holder identifier in the mobile storage 21. The movement information obtainer 233 obtains, for example, movement information in the mobile storage 21. The movement information is, for example, a right holder identifier or information indicating the start of movement.

The mobile transmitter 24 transmits various items of information to the information processor 1. The various items of information are, for example, movement information, videos, or attribute value sets.

The movement information transmitter 241 transmits, to the information processor 1, movement information specifying movement of the mobile terminal 2 at the start of movement. The movement information transmitter 241 transmits the movement information obtained by the movement information obtainer 233 to the information processor 1.

The mobile video transmitter 242 transmits the video captured with the image capturer 231 to the information processor 1. The mobile video transmitter 242 may transmit the video any time. For example, after the mobile processor 23 obtains a video paired with the attribute value set responding to the received inquiry, the mobile video transmitter 242 transmits the video to the information processor 1. For example, when the end of movement is detected, the mobile video transmitter 242 transmits the videos accumulated after the detection of the start of movement to the information processor 1. For example, when the preservation condition is determined to be satisfied, the mobile video transmitter 242 transmits the video corresponding to the determination to the information processor 1.

The set transmitter 243 transmits the attribute value set in the mobile storage 21 to the information processor 1. The set transmitter 243 transmits, for example, the attribute value set in the mobile storage 21 to the information processor 1 at the end of movement of the mobile terminal 2. Upon obtaining the attribute value set, the set transmitter 243 may immediately transmit the attribute value set to the information processor 1. More specifically, the set transmitter 243 may transmit the attribute value set any time.

The user storage 31 included in each user terminal 3 stores various items of information, including, for example, user identifiers and videos.

The user reception 32 receives various instructions and information. The various instructions and information are, for example, inquiries and purchase instructions.

The purchase instructions are instructions to purchase videos. Each purchase instruction is associated with a user identifier. The purchase instruction normally includes information specifying a video. The purchase instruction includes, for example, a video identifier. The purchase instruction includes, for example, a purchase condition. The purchase condition is, for example, a purchase price. The purchase condition includes, for example, information specifying a right period.

Various instructions and information may be input in any manner, such as with a touchscreen, a keyboard, a mouse, or a menu screen.

The user processor 33 performs various processes. The various processes include, for example, transforming the data structure of various instructions and information received by the user reception 32 for transmission. The various processes include, for example, transforming the structure of the information received by the user receiver 35 for transmission.

The user transmitter 34 transmits various instructions and information to the information processor 1. The various instructions and information are, for example, inquiries and purchase instructions.

The user receiver 35 receives various items of information and instructions. The various items of information and instructions include, for example, inquiries, videos, and state information.

The user output device 36 outputs various items of information. The various items of information are, for example, videos and state information.

Outputting in this example includes displaying on a display, projection with a projector, printing with a printer, an audio output, transmission to external devices, accumulation into a recording medium, and delivery of a processed result to another processor or another program.

Each of the storage 11, the set storage 111, the mobile storage 21, and the user storage 31 may be a nonvolatile recording medium or may instead be a volatile recording medium.

The storage 11 or other storages may store information through any process. For example, the storage 11 or other storages may store information with a recording medium, store information transmitted through, for example, a communication line, or store information input with an input device.

The receiver 12, the movement information receiver 121, the inquiry receiver 122, the set receiver 123, the mobile receiver 22, and the user receiver 35 are normally implemented with a wireless or wired communicator, but may be implemented with a communicator that receives a broadcast.

The processing unit 13, the movement information accumulator 131, the set accumulator 132, the video obtainer 133, the right holder processor 134, the first preserver 1341, the second preserver 1342, the third preserver 1343, the rewarding unit 1344, the changer 1345, the mobile processor 23, the tag obtainer 232, the movement information obtainer 233, and the user processor 33 may normally be implemented with, for example, a processor or a memory.

The processing of, for example, the processing unit 13 is normally implemented with software. The software is recorded in a recording medium such as a read-only memory (ROM). The processing unit 13 may be implemented with hardware (dedicated circuit). The processor may be any unit such as a central processing unit (CPU), a microprocessor unit (MPU), or a graphical processing unit (GPU).

The video obtainer 133 and the right holder processor 134 may be implemented with a wireless or wired communicator.

The transmitter 14, the video transmitter 141, the state transmitter 142, the request transmitter 143, the mobile transmitter 24, the movement information transmitter 241, the mobile video transmitter 242, the set transmitter 243, and the user transmitter 34 are normally implemented with a wireless or wired communicator, but may be implemented with a broadcast device.

The image capturer 231 is implemented with a camera. The camera may be of any type, such as a charge-coupled device (CCD) camera, a complementary metal-oxide semiconductor (CMOS) camera, a three-dimensional camera, or a laser imaging detection and ranging (LiDAR) camera.

The user reception 32 may be implemented with, for example, the device driver of an input device such as a touchscreen or a keyboard or with, for example, the control software of a menu screen.

The user output device 36 may or may not include an output device such as a display or a speaker. The user output device 36 may be implemented with, for example, driver software of an output device or with driver software of an output device and an output device.

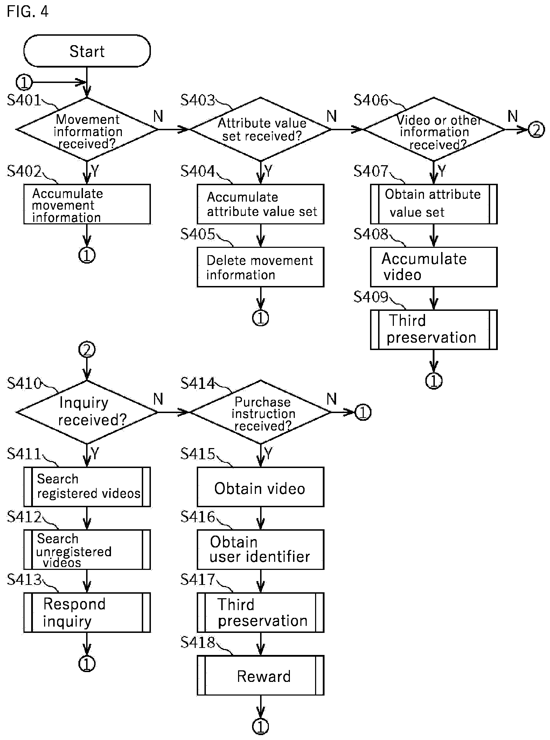

An operation example of the information system A is described now. First, the operation example of the information processor 1 is described with reference to the flowchart in FIG. 4.

(S401) The movement information receiver 121 determines whether movement information associated with a right holder identifier is received from any mobile terminal 2. When movement information is received, the processing proceeds to S402, and when the movement information is not received, the processing proceeds to S403.

(S402) The movement information receiver 121 accumulates the movement information received in S401 into the storage 11 in a manner associated with the right holder identifier. The processing returns to S401.

(S403) The set receiver 123 determines whether an attribute value set associated with a right holder identifier is received from any mobile terminal 2. When an attribute value set is received, the processing proceeds to S404, and when an attribute value set is not received, the processing proceeds to S406.

(S404) The set accumulator 132 accumulates the attribute value set received in S403 into the set storage 111 in a manner associated with the right holder identifier.

(S405) The processing unit 13 deletes the movement information associated with the right holder identifier from the storage 11. The processing returns to S401. Deleting the movement information is equivalent to rewriting the movement information with information indicating that the mobile terminal 2 is not in the state of being able to transmit a video.

(S406) The receiver 12 determines whether a video or other information associated with a right holder identifier is received from any mobile terminal 2. When a video or other information is received, the processing proceeds to S407, and when a video or other information is not received, the processing proceeds to S410.

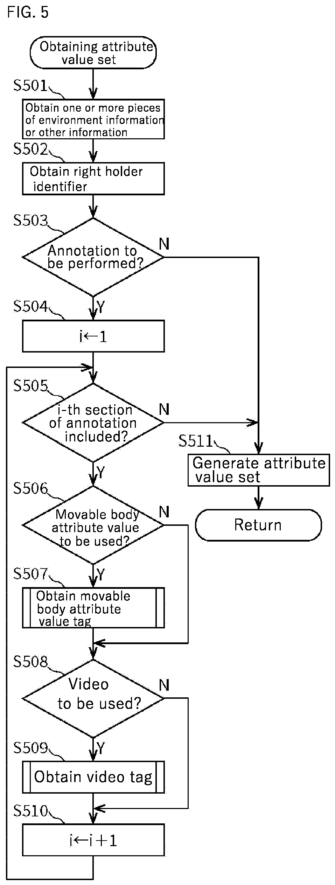

(S407) The processing unit 13 obtains the attribute value set corresponding to the video received in S406. An example of the process of obtaining the attribute value set is described with reference to the flowchart in FIG. 5. The process of obtaining the attribute value set may be a process of obtaining the attribute value set associated with the received video.

(S408) The second preserver 1342 accumulates the video received in S406 in a manner associated with the attribute value set acquired in S407. For example, the second preserver 1342 accumulates the video into the storage 11, but may accumulate the video into another device such as a device included in a blockchain. The process of accumulating the video performed by the second preserver 1342 is a second preservation process.

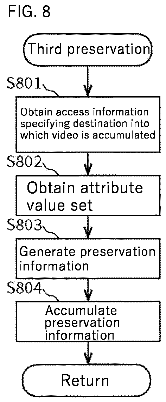

(S409) The third preserver 1343 performs a third preservation process. The processing returns to S401. An example of the third preservation process is described with reference to the flowchart in FIG. 8.

(S410) The inquiry receiver 122 determines whether any inquiry is received from any user terminal 3. When an inquiry is received, the processing proceeds to S411, and when no inquiry is received, the processing proceeds to S414.

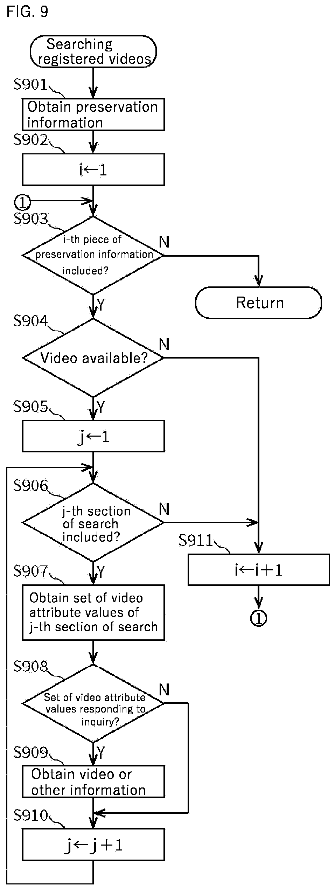

(S411) The video obtainer 133 performs a registered video search process. An example of the registered video search process is described with reference to the flowchart in FIG. 9. In this step, the video obtainer 133 may or may not obtain a video.

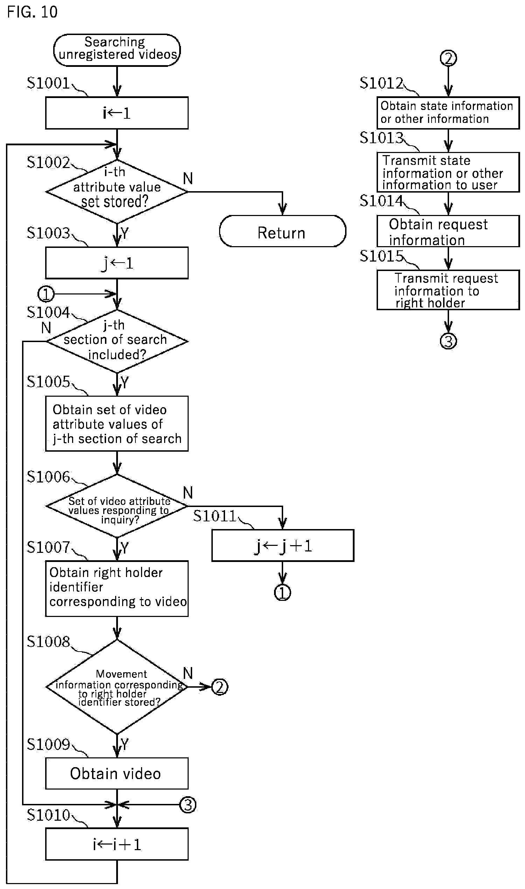

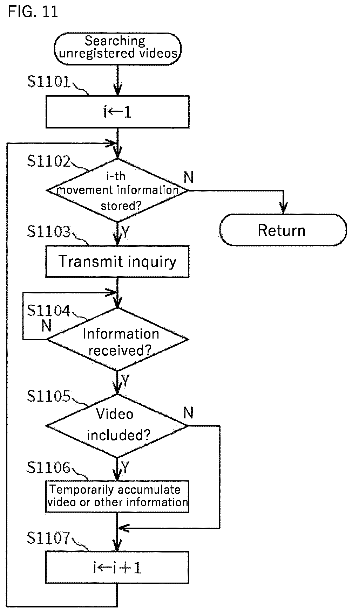

(S412) The video obtainer 133 performs an unregistered video search process. An example of the unregistered video search process is described with reference to the flowcharts in FIGs. 10 and 11. In this step, the video obtainer 133 may or may not obtain a video.

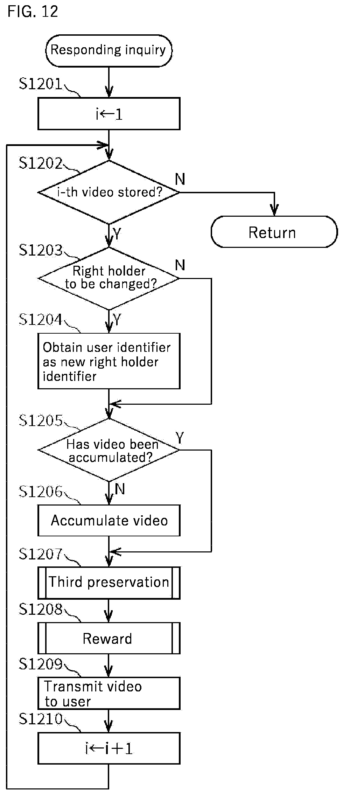

(S413) The processing unit 13 performs an inquiry responding process using, for example, one or more obtained videos. The processing returns to S401. An example of the inquiry responding process is described with reference to the flowchart in FIG. 12. When no video is obtained in S411 and S412, the inquiry responding process is not performed.

(S414) The receiver 12 determines whether any purchase instruction is received from any user terminal 3. When a purchase instruction is received, the processing proceeds to S415, and when no purchase instruction is received, the processing returns to S401.

(S415) The video obtainer 133 obtains a video corresponding to the purchase instruction. For example, the video obtainer 133 receives a video corresponding to the purchase instruction from a mobile terminal 2. For example, the video obtainer 133 obtains a video corresponding to the purchase instruction among registered videos. For example, the video obtainer 133 may obtain a video corresponding to the purchase instruction among unregistered videos.

(S416) The third preserver 1343 obtains the user identifier corresponding to the user terminal 3 that has transmitted the purchase instruction. This user identifier is to be the right holder identifier of the purchased video.

(S417) The third preserver 1343 performs the third preservation process using the user identifier obtained in S416. An example of the third preservation process is described with reference to the flowchart in FIG. 8.

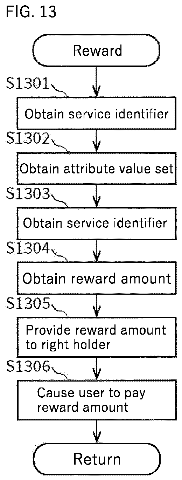

(S418) The rewarding unit 1344 performs a rewarding process of rewarding the original right holder of the purchased video. The processing returns to S401. An example of the rewarding process is described with reference to the flowchart in FIG. 13.

In the flowchart in FIG. 4, the process ends when the power is turned off, or an interruption ends the process.

An example of the process of obtaining the attribute value set in S407 is described with reference to the flowchart in FIG. 5.

(S501) The mobile processor 23 or the set accumulator 132 (hereafter referred to as the mobile processor 23 or another device) obtains one or more pieces of environment information or other information associated with a target video. The target video is a video for which a video attribute value is to be obtained. The target video is, for example, a received video, a captured video, or a video that is being captured. The environment information or other information may be environment information alone or may include environment information and one or more movable body attribute values.

(S502) The mobile processor 23 or another device obtains the right holder identifier associated with the received video.

(S503) The mobile processor 23 or another device determines whether to annotate the video. When annotation is performed, the processing proceeds to S504, and when annotation is not performed, the processing proceeds to S511. To use or not to use annotation is predetermined.

(S504) The mobile processor 23 or another device substitutes 1 for a counter i.

(S505) The mobile processor 23 or another device determines whether an i-th section of annotation is included in the video. When the i-th section of annotation is included, the processing proceeds to S506, and when the i-th section of annotation is not included, the processing proceeds to S511.

(S506) The mobile processor 23 or another device determines whether to use a movable body attribute value for the annotation. When a movable body attribute value is used, the processing proceeds to S507, and when no movable body attribute value is used, the processing proceeds to S508. To use or not to use a movable body attribute value for the annotation is predetermined.

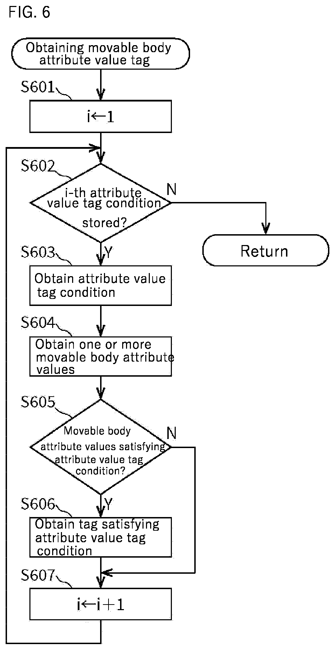

(S507) The mobile processor 23 or another device performs a process of obtaining a movable body attribute value tag. An example of the process of obtaining a movable body attribute value tag is described with reference to the flowchart in FIG. 6.

(S508) The mobile processor 23 or another device determines whether to use the video for the annotation. When the video is used, the processing proceeds to S509, and when the video is not used, the processing proceeds to S510. To use or not to user the video for the annotation is predetermined.

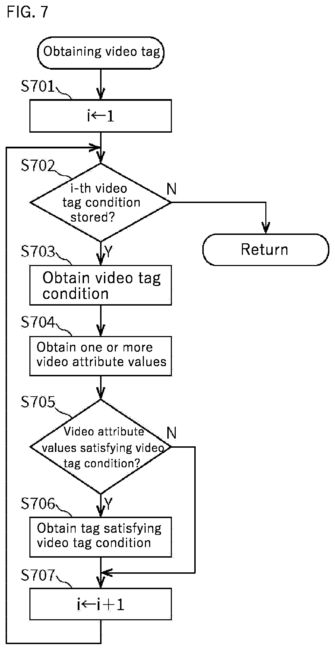

(S509) The mobile processor 23 or another device performs a process of obtaining a video tag. An example of the process of obtaining a video tag is described with reference to the flowchart in FIG. 7.

(S510) The mobile processor 23 or another device increments the counter i by 1. The processing returns to S505.

(S511) The mobile processor 23 or another device generates an attribute value set including one or more pieces of environment information, one or more tags, and the right holder identifier. The processing returns to the upstream process.

In the flowchart in FIG. 5, the video may be divided into two or more sections for inspection, and the processing in S501 to S511 may be performed on each section for inspection.

An example of the process of obtaining a movable body attribute value tag in S507 is described with reference to the flowchart in FIG. 6.

(S601) The mobile processor 23 or another device substitutes 1 for the counter i.

(S602) The mobile processor 23 or another device determines whether an i-th attribute value tag condition is stored. When the i-th attribute value tag condition is stored, the processing proceeds to S603, and when the i-th attribute value tag condition is not stored, the processing returns to the upstream process.

(S603) The mobile processor 23 or another device obtains the i-th attribute value tag condition.

(S604) The mobile processor 23 or another device obtains one or more movable body attribute values for determination for the i-th attribute value tag condition.

(S605) The mobile processor 23 or another device determines whether the movable body attribute values satisfy the i-th attribute value tag condition. When the attribute value tag condition is satisfied, the processing proceeds to S606, and when the attribute value tag condition is not satisfied, the processing proceeds to S607.

(S606) The mobile processor 23 or another device obtains the tag paired with the i-th attribute value tag condition, and associates the tag with the corresponding video. Associating the tag with the video is normally equivalent to associating the tag with the fields included in the video.

(S607) The mobile processor 23 or another device increments the counter i by 1. The processing returns to S602.

An example of the process of obtaining a video tag in S509 is described now with reference to the flowchart in FIG. 7.

(S701) The mobile processor 23 or another device substitutes 1 for the counter i.

(S702) The mobile processor 23 or another device determines whether an i-th video tag condition is stored. When the i-th video tag condition is stored, the processing proceeds to S703, and when the i-th video tag condition is not stored, the processing returns to the upstream process.

(S703) The mobile processor 23 or another device obtains the i-th video tag condition.

(S704) The mobile processor 23 or another device obtains one or more video attribute values for determination for the i-th video tag condition.

(S705) The mobile processor 23 or another device determines whether the movable body attribute values satisfy the i-th attribute value tag condition. When the attribute value tag condition is satisfied, the processing proceeds to S706, and when the attribute value tag condition is not satisfied, the processing proceeds to S707.

(S706) The mobile processor 23 or another device obtains the tag paired with the i-th attribute value tag condition, and associates the tag with the corresponding video. Associating the tag with the video is normally equivalent to associating the tag with the fields included in the video.

(S707) The mobile processor 23 or another device increments the counter i by 1. The processing returns to S702.

An example of the third preservation process in S409 and S417 is described now with reference to the flowchart in FIG. 8.

(S801) The third preserver 1343 obtains access information specifying the destination into which the video is accumulated.

(S802) The third preserver 1343 obtains the attribute value set corresponding to the accumulated video.

(S803) The third preserver 1343 generates preservation information including the access information obtained in S801, the attribute value set obtained in S802, and the right holder identifier of the video. When a new right holder identifier is obtained, the third preserver 1343 generates preservation information including the new right holder identifier and the original right holder identifier.

(S804) The third preserver 1343 accumulates the preservation information generated in S803. The processing returns to the upstream process.

In S804, when preservation information for the video corresponding to the preservation information to be accumulated has been accumulated, such preservation information is added to the preservation information generated in S803. This allows managing of, for example, the right holder changes of the video.

An example of the registered video search process in S411 is described now with reference to the flowchart in FIG. 9.

(S901) The video obtainer 133 obtains all pieces of preservation information. For example, the video obtainer 133 obtains the pieces of preservation information in the blockchain.

(S902) The video obtainer 133 substitutes 1 for the counter i.

(S903) The video obtainer 133 determines whether an i-th piece of preservation information is included in the preservation information obtained in S901. When the i-th piece of preservation information is included, the processing proceeds to S904, and when the i-th piece of preservation information is not included, the processing returns to the upstream process.

(S904) The video obtainer 133 inspects the i-th piece of preservation information, and determines whether the video corresponding to the i-th piece of preservation information is available to a third party. When the video is available, the processing proceeds to S905, and when the video is not available, the processing proceeds to S911. Being available refers to, for example, being viewable, being salable, or being viewable and salable.

(S905) The video obtainer 133 substitutes 1 for a counter j.

(S906) The video obtainer 133 determines whether a j-th section of search is included in the i-th piece of preservation information or in the video corresponding to the i-th piece of preservation information. When the j-th section of search is included, the processing proceeds to S907, and when the j-th section of search is not included, the processing proceeds to S911.

The section of search is a volume of a video used to determine whether an inquiry can be responded. The volume of a video corresponding to the section of search is, for example, a video from the start to the end of video capturing, a video having a duration of a predetermined period, a video until an occurrence of a predetermined event (e.g., a video recorded from when the speed as a movable body attribute value is 0 to when the speed is returned to 0 next time or a video recorded during the period from leaving a resident location, such as a home parking lot, to returning to the resident location), or a video recorded for a predetermined period before and after a predetermined tag (e.g., the accident tag or the traffic jam tag) is applied. However, the section of search may be any volume of video.

(S907) The video obtainer 133 obtains a set of video attribute values of the j-th section of search from the i-th piece of preservation information.

(S908) The video obtainer 133 determines whether the set of video attribute values of the j-th section of search responds to the inquiry. When the set of video attribute values responds to the inquiry, the processing proceeds to S909, and when the set of video attribute values does not respond to the inquiry, the processing proceeds to S910.

(S909) The video obtainer 133 obtains the video or other information corresponding to the j-th section of search, and temporarily accumulates the video or other information into a buffer (not shown). The video or other information is, for example, the video and the set of the video attribute value or is the video.

(S910) The video obtainer 133 increments the counter j by 1. The processing returns to S906.

(S911) The video obtainer 133 increments the counter i by 1. The processing returns to S903.

A first example of the unregistered video search process in S412 is now described with reference to the flowchart in FIG. 10. In the first example of the unregistered video search process, an attribute value set in the set storage 111 is used.

(S1001) The video obtainer 133 substitutes 1 for the counter i.

(S1002) The video obtainer 133 determines whether an i-th attribute value set is stored in the set storage 111. When the i-th attribute value set is stored, the processing proceeds to S1003, and when i-th attribute value set is not stored, the processing returns to the upstream process.

(S1003) The video obtainer 133 substitutes 1 for the counter j.

(S1004) The video obtainer 133 determines whether a j-th section of search corresponding to the i-th attribute value set is included. When the j-th section of search is included, the processing proceeds to S1005, and when the j-th section of search is not included, the processing proceeds to S1010.

(S1005) The video obtainer 133 obtains, from the set storage 111, a set of video attribute values of the j-th section of search in the i-th attribute value set.

(S1006) The video obtainer 133 determines whether the set of video attribute values obtained in S1005 responds to the inquiry. When the set of video attribute value responds to the inquiry, the processing proceeds to S1007, and when the set of video attribute value does not respond to the inquiry, the processing proceeds to S1011.

(S1007) The video obtainer 133 obtains the right holder identifier corresponding to the video.

(S1008) The video obtainer 133 determines whether the movement information corresponding to the right holder identifier obtained in S1007 is stored. When the movement information is stored (e.g., when the power of the corresponding mobile terminal 2 is on), the processing proceeds to S1009, and when the movement information is not stored (e.g., when the power of the mobile terminal 2 is off), the processing proceeds to S1012.

(S1009) The video obtainer 133 obtains the video corresponding to the j-th section of search from the mobile terminal 2 corresponding to the right holder identifier obtained in S1007, and temporarily accumulates the video into a buffer (not shown). For example, the video obtainer 133 transmits a request for the video corresponding to the j-th section of search to the mobile terminal 2, and receives the video corresponding to the request from the mobile terminal 2.

(S1010) The video obtainer 133 increments the counter i by 1. The processing returns to S1002.

(S1011) The video obtainer 133 increments the counter j by 1. The processing returns to S1004.

(S1012) The video obtainer 133 obtains state information or other information. The state information or other information includes, for example, state information indicating that the power of the mobile terminal 2 is off.

(S1013) The state transmitter 142 transmits the state information or other information obtained in S1012 to the user that has transmitted the inquiry.

(S1014) The video obtainer 133 obtains request information.

(S1015) The request transmitter 143 transmits the request information obtained in S1014 to the right holder of the video. The processing returns to S1010.

A second example of the unregistered video search process in S412 is now described with reference to the flowchart in FIG. 11. In the second example of the unregistered video search process, a mobile terminal 2 is inquired.

(S1101) The video obtainer 133 substitutes 1 for the counter i.

(S1102) The video obtainer 133 determines whether an i-th piece of movement information is stored in the storage 11. When the i-th piece of movement information is stored, the processing proceeds to S1103, and when the i-th piece of movement information is not stored, the processing returns to the upstream process.

(S1103) The video obtainer 133 transmits the inquiry to the mobile terminal 2 corresponding to the i-th piece of movement information.

(S1104) The video obtainer 133 determines whether information is received from the mobile terminal 2 corresponding to the i-th piece of movement information. When information is received, the processing proceeds to S1105, and when no information is received, the processing returns to S1104.

(S1105) The video obtainer 133 determines whether a video is included in the information received in S1104. When a video is included, the processing proceeds to S1106, and when no video is included, the processing proceeds to S1107.

(S1106) The video obtainer 133 temporarily accumulates the video or other information received in S1104 into a buffer (not shown).

(S1107) The video obtainer 133 increments the counter j by 1. The processing returns to S1102.

An example of the inquiry responding process in S413 is described now with reference to the flowchart in FIG. 12.

(S1201) The right holder processor 134 substitutes 1 for the counter i.

(S1202) The right holder processor 134 determines whether an i-th video is in a buffer (not shown). When the i-th video is in the buffer, the processing proceeds to S1203, and when the i-th video is not in the buffer, the processing returns to the upstream process.

(S1203) The changer 1345 determines whether to change the right holder of the i-th video. When the right holder is to be changed, the processing proceeds to S1204, and when the right holder is not to be changed, the processing proceeds to S1205.

The right holder of the video may be changed in response to every inquiry or may be changed when the inquiry includes information indicating a request for changing the right holder.

(S1204) The changer 1345 obtains the user identifier of the user terminal 3. The user identifier is to be a new right holder identifier.

(S1205) The right holder processor 134 determines whether the i-th video has been registered. When the i-th video has been registered, the processing proceeds to S1207, and when the i-th video has not been registered, the processing proceeds to S1206.

(S1206) The first preserver 1341 accumulates the i-th video.

(S1207) The third preserver 1343 performs the third preservation process for the i-th video using the new right holder identifier obtained in S1204. The example of the third preservation process is described with reference to the flowchart in FIG. 8.

(S1208) The rewarding unit 1344 performs the rewarding process. An example of the rewarding process is described with reference to the flowchart in FIG. 13.

(S1209) The video transmitter 141 transmits the i-th video to the user terminal 3 that has transmitted the inquiry.

(S1210) The right holder processor 134 increments the counter i by 1. The processing returns to S1202.

An example of the rewarding process in S418 and S1208 is described with reference to the flowchart in FIG. 13.

(S1301) The rewarding unit 1344 obtains one or more right holder identifiers of a target video. The rewarding unit 1344 may obtain the right holder identifier of the past right holder of the target video.

(S1302) The rewarding unit 1344 obtains the attribute value set of the target video.

(S1303) The rewarding unit 1344 obtains one or more service identifiers that identify the service performed on the target video. The service identifiers indicate, for example, viewing and purchasing.

(S1304) The rewarding unit 1344 obtains a reward amount using one or more pieces of information among the service identifiers obtained in S1303 and the attribute value set obtained in S1302.

When two or more right holder identifiers are obtained, the rewarding unit 1344 obtains a reward amount for each right holder identifier. For right holder history information including two or more right holder identifiers, the rewarding unit 1344 may obtain the reward amount for each right holder identifier.

(S1305) The rewarding unit 1344 performs a process of providing the right holder identified by the right holder identifier obtained in S1301 with a reward for the reward amount obtained in S1304.

(S1306) The rewarding unit 1344 performs a process of causing the user that has enjoyed the service relevant to the target video to pay the reward. The processing returns to the upstream process.

The process of causing the user to pay the reward is, for example, a process of causing the user to pay the reward amount obtained in S1304. The process of causing the user to pay the reward is, for example, a process of causing the user to pay the reward amount obtained in S1304 and the profit obtained by the managing company of the information processor 1.

In the flowchart in FIG. 13, the managing company of the information processor 1 may obtain the profit and accumulate the profit.

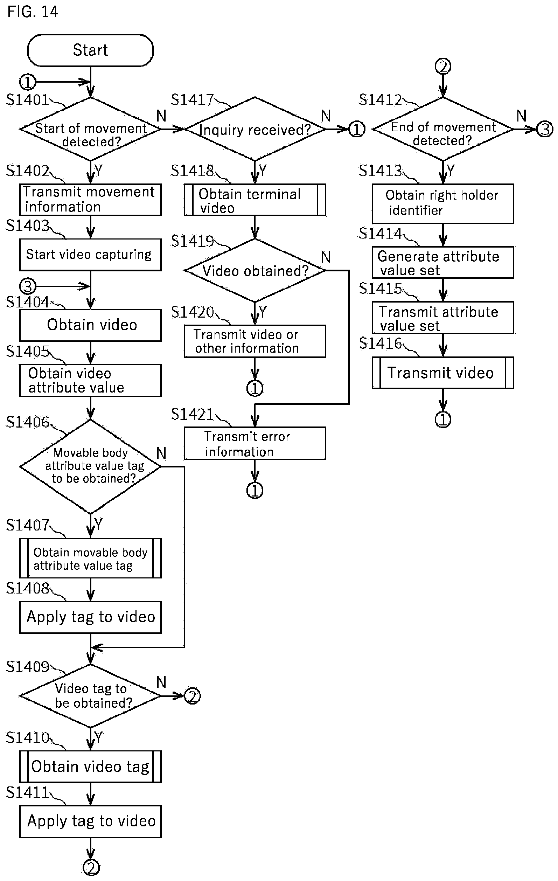

The operation example of each mobile terminal 2 is described with reference to the flowchart in FIG. 14.

(S1401) The mobile processor 23 determines whether the start of movement is detected. When the start of movement is detected, the processing proceeds to S1402, and when the start of movement is not detected, the processing proceeds to S1417. The movement is started in response to, for example, turning on of the engine of the movable body in which the mobile terminal 2 is installed.

(S1402) The movement information obtainer 233 obtains movement information. The movement information transmitter 241 transmits the movement information to the information processor 1.

(S1403) The image capturer 231 starts capturing a video.

(S1404) The image capturer 231 obtains the video.

(S1405) The mobile processor 23 obtains one or more video attribute values and associates the video attribute values with the video obtained in S1404.

The mobile processor 23 obtains, for example, location information, time information, weather information, temperature information, or season information. The mobile processor 23 obtains, for example, one or more movable body attribute values (e.g., CAN data).

(S1406) The tag obtainer 232 determines whether to obtain a movable body attribute value tag. When the movable body attribute value tag is to be obtained, the processing proceeds to S1407, and when the movable body attribute value tag is not to be obtained, the processing proceeds to S1409. To obtain or not to obtain the movable body attribute value tag is predetermined.

(S1407) The tag obtainer 232 performs the process of obtaining a movable body attribute value tag. An example of the process of obtaining a movable body attribute value tag is described with reference to the flowchart in FIG. 6. In this step, the tag may or may not be obtained.

(S1408) Upon obtaining one or more tags in S1407, the tag obtainer 232 associates the tags with the video obtained in S1404.

(S1409) The tag obtainer 232 determines whether to obtain a video tag. When a video tag is to be obtained, the processing proceeds to S1410, and when a video tag is not to be obtained, the processing proceeds to S1412. To obtain or not to obtain a video tag is predetermined.

(S1410) The tag obtainer 232 performs a process of obtaining a video tag. An example of the process of obtaining a video tag is described with reference to the flowchart in FIG. 7. In this step, the tag may or may not be obtained.

(S1411) Upon obtaining one or more tags in S1410, the tag obtainer 232 associates the tags with the video obtained in S1404.

(S1412) The mobile processor 23 determines whether the end of movement is detected. When the end of movement is detected, the processing proceeds to S1413, and when the end of movement is not detected, the processing returns to S1404.

(S1413) The mobile processor 23 obtains a right holder identifier from the mobile storage 21.

(S1414) The mobile processor 23 generates an attribute value set including one or more movable body attribute values obtained in S1405, one or more tags obtained in S1407, and one or more tags obtained in S1410.

(S1415) The set transmitter 243 transmits the attribute value set generated in S1414 to the information processor 1 in a manner associated with the right holder identifier.

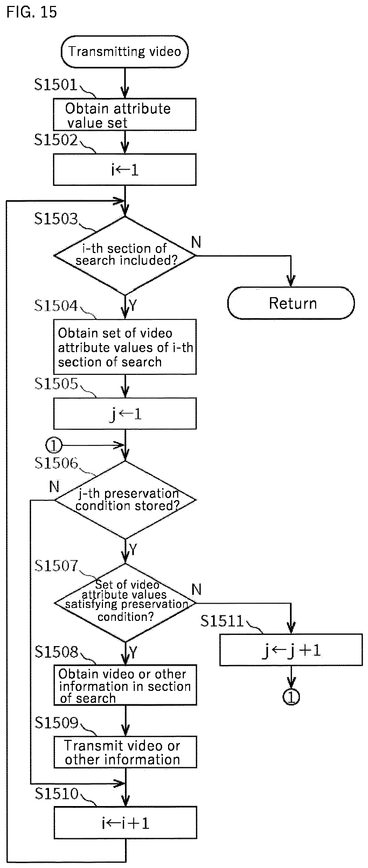

(S1416) For example, the mobile video transmitter 242 performs a video transmission process. The processing returns to S1401. An example of the video transmission process is described with reference to the flowchart in FIG. 15. The video transmission process is a process of automatically transmitting the video satisfying a preservation condition.

(S1417) The mobile receiver 22 determines whether an inquiry is received from the information processor 1. When an inquiry is received, the processing proceeds to S1418, and when no inquiry is received, the processing returns to S1401.

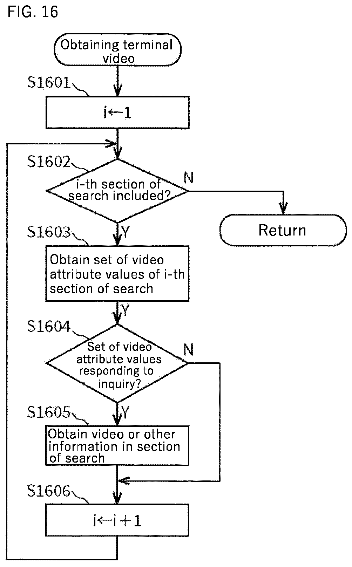

(S1418) The mobile processor 23 performs a process of obtaining a terminal video corresponding to the inquiry received in S1417. An example of the process of obtaining a terminal video is described with reference to the flowchart in FIG. 16. The process of obtaining a terminal video is a process of obtaining a video responding to the inquiry from the videos stored in the mobile storage 21.

(S1419) The mobile processor 23 determines whether the video is obtained in S1418. When the video is obtained, the processing proceeds to S1420, and when the video is not obtained, the processing proceeds to S1421.

(S1420) The mobile video transmitter 242 transmits the video or other information to the information processor 1. The video or other information includes, for example, the video, the attribute value set, and the right holder identifier.

(S1421) The mobile video transmitter 242 transmits error information. The error information indicates that the video is not obtained.

In the flowchart in FIG. 14, a set of video attribute values including all or a subset of the video attributes obtained in S1405, the tags obtained in S1407, and the tags obtained in S1410 may be transmitted to the information processor 1 every time a video is obtained, at predetermined intervals, or when a predetermined condition is satisfied (e.g., when the accident tag or the traffic jam tag is obtained).

In the flowchart in FIG. 14, the video transmission process (process in S1416) is performed after the end of movement is detected, but the video transmission process may be performed continuously. Performing the video transmission process continuously refers to, for example, performing the video transmission process (S1416) immediately after S1411. This allows the videos satisfying a preservation condition to be preserved in a small storage area for videos in the storage 11.

In the flowchart in FIG. 14, the process ends when the power is turned off, or an interruption ends the process.

An example of the video transmission process in S1416 is described now with reference to the flowchart in FIG. 15.

(S1501) The mobile processor 23 obtains the attribute value set stored in the mobile storage 21.

(S1502) The mobile processor 23 substitutes 1 for the counter i.

(S1503) The mobile processor 23 determines whether an i-th section of search is included. When the i-th section of search is included, the processing proceeds to S1504, and when the i-th section of search is not included, the processing to the upstream process.

(S1504) The mobile processor 23 obtains the set of video attribute values of the i-th section of search.

(S1505) The mobile processor 23 substitutes 1 for the counter j.

(S1506) The mobile processor 23 determines whether a j-th preservation condition is stored. When the j-th preservation condition is stored, the processing proceeds to S1507, and when the j-th preservation condition is not stored, the processing proceeds to S1510.

(S1507) The mobile processor 23 determines whether the set of video attribute values obtained in S1504 satisfies the j-th preservation condition. When the set of video attribute values satisfies the j-th preservation condition, the processing proceeds to S1508, and when the set of video attribute values does not satisfy the j-th preservation condition, the processing proceeds to S1511.

(S1508) The mobile processor 23 obtains the video or other information in the i-th section of search. The video or other information in the i-th section of search includes, for example, the video in the i-th section of search and the attribute value set corresponding to the video.

(S1509) The mobile video transmitter 242 transmits the video or other information obtained in S1508 to the information processor 1.

(S1510) The mobile processor 23 increments the counter i by 1. The processing returns to S1503.

(S1511) The mobile processor 23 increments the counter j by 1. The processing returns to S1506.

An example of the process of obtaining a terminal video in S1418 is described now with reference to the flowchart in FIG. 16.

(S1601) The mobile processor 23 substitutes 1 for the counter i.

(S1602) The mobile processor 23 determines whether the i-th section of search is included. When the i-th section of search is included, the processing proceeds to S1603, and when the i-th section of search is not included, the processing returns to the upstream process.

(S1603) The mobile processor 23 obtains the set of video attribute values of the i-th section of search.

(S1604) The mobile processor 23 determines whether the set of video attribute values of the i-th section of search responds to the inquiry. When the set responds to the inquiry, the processing proceeds to S1605, and when the set does not respond to the inquiry, the processing proceeds to S1606.

(S1605) The mobile processor 23 obtains the video or other information in the i-th section of search. The video or other information includes, for example, the video and the set of video attribute values.

(S1606) The mobile processor 23 increments the counter i by 1. The processing returns to S1602.

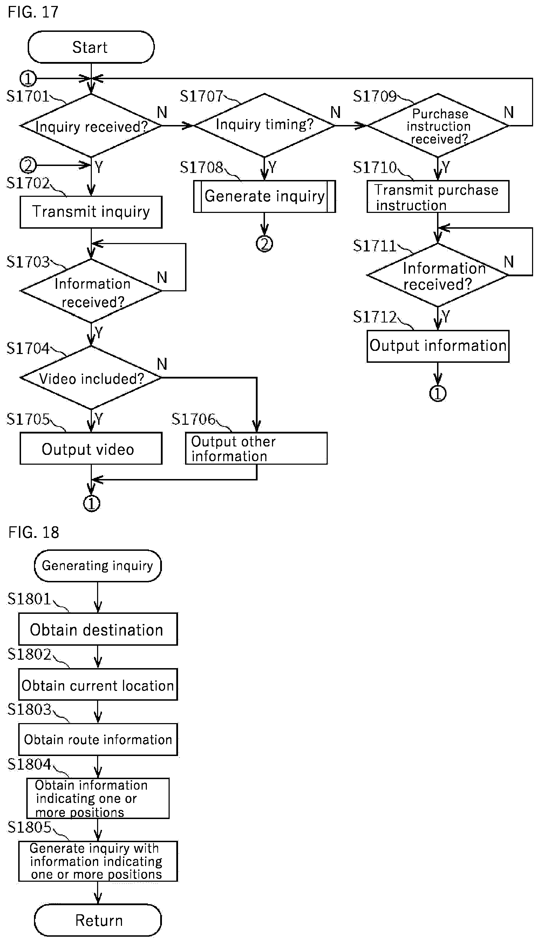

An operation example of each user terminal 3 is described now with reference to the flowchart in FIG. 17.

(S1701) The user reception 32 determines whether any inquiry is received from a user. When an inquiry is received, the processing proceeds to S1702, and when no inquiry is received, the processing proceeds to S1707.

(S1702) The user processor 33 generates an inquiry to be transmitted. The user transmitter 34 then transmits the inquiry to the information processor 1 in a manner associated with the user identifier.

(S1703) The user receiver 35 determines whether information is received from the information processor 1. When information is received, the processing proceeds to S1704, and when no information is received, the processing returns to S1703.

(S1704) The user processor 33 determines whether the information received in S1703 includes a video. When the information includes a video, the processing proceeds to S1705, and when the information includes no video, the processing proceeds to S1706.

(S1705) The user output device 36 outputs the received video. The processing returns to S1701. The user output device 36 may output information other than the video.

(S1706) The user output device 36 outputs other information that has been received. The processing returns to S1701.

(S1707) The user processor 33 determines whether the time for inquiry has arrived. When the time for inquiry has arrived, the processing proceeds to S1708, and when the time for inquiry has not arrived, the processing proceeds to S1709.

The time for inquiry is, for example, when a destination is set in the user terminal 3 serving as a navigation terminal, when the user terminal 3 installed in an automobile detects a traffic jam, or when an inquiry is received from the user.

(S1708) The user processor 33 performs a process of generating an inquiry. The processing proceeds to S1702. An example of the process of generating an inquiry is described with reference to the flowchart in FIG. 18.

(S1709) The user reception 32 determines whether a purchase instruction is received from the user. When a purchase instruction is received, the processing proceeds to S1710, and when a purchase instruction is not received, the processing returns to S1701.

(S1710) The user processor 33 generates a purchase instruction to be transmitted. The user transmitter 34 then transmits the purchase instruction to the information processor 1 in a manner associated with the user identifier.

(S1711) The user receiver 35 determines whether information is received from the information processor 1. When information is received, the processing proceeds to S1712, and when no information is received, the processing returns to S1711. The information includes, for example, a video, information indicating completion of a right holder change, or an attribute value set of the video.

(S1712) The user processor 33 generates information to be output based on the received information. The user output device 36 outputs the information. The processing returns to S1701.

In the flowchart in FIG. 17, the process ends when the power is turned off, or an interruption ends the process.

An example of the process of generating an inquiry in S1708 is described now with reference to the flowchart in FIG. 18.

(S1801) The user processor 33 obtains a destination.

(S1802) The user processor 33 obtains a current location.

(S1803) The user processor 33 searches for a route using the destination and the current location, and obtains route information.

(S1804) The user processor 33 obtains information indicating one or more positions on the route specified by the route information obtained in S1803 and satisfying an extraction condition.

(S1805) The user processor 33 generates an inquiry using the information indicating one or more positions obtained in S1804. The processing returns to the upstream process. For example, the user processor 33 generates an inquiry for a search for a video captured within one hour from the present time, having the traffic jam tag or the accident tag, and paired with an attribute value set including the information of any of one or more positions.

Instead of performing the process in the flowchart in FIG. 18, the user processor 33 may obtain the current location and generate an inquiry including the current location. The inquiry is a request for transmitting a video corresponding to a predetermined tag (e.g., the accident tag or the traffic jam tag) within an area surrounding the current location (e.g., at a distance within a threshold).

A specific operation example of the information system A according to the present embodiment is described below.

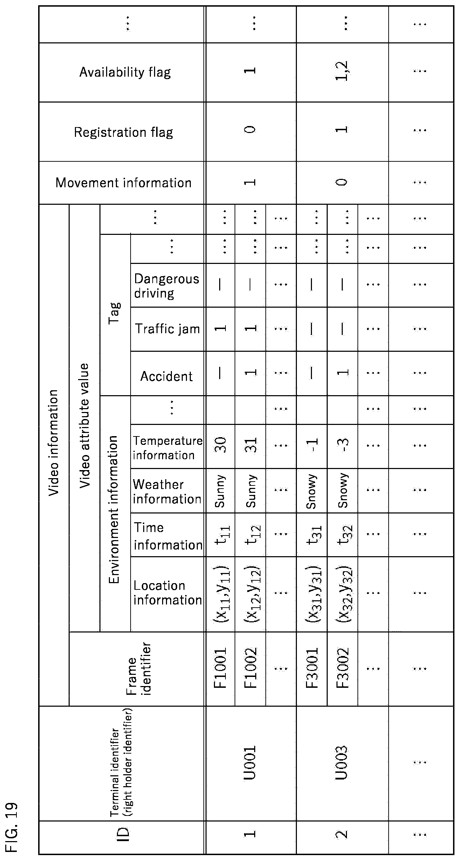

The set storage 111 in the information processor 1 currently stores a terminal management table having the structure shown in FIG. 19. The terminal management table is a table for managing one or more pieces of terminal information. The terminal management table is a table for managing the mobile terminals 2 that transmit videos. The terminal management table is a table for managing one or more records each including an ID, a terminal identifier, video information, movement information, a registration flag, and an availability flag. The video information is about a captured video and includes a frame identifier and a video attribute value. The video attribute value includes environment information and a tag. The environment information includes location information, time information, weather information, and temperature information. The tag includes an accident tag, a traffic jam tag, and a dangerous driving tag. More specifically, each video is tagged with at least one of an accident, a traffic jam, or dangerous driving.

The ID indicates information identifying a record. The terminal identifier is an identifier of any of the mobile terminals 2, and is the same as the right holder identifier identifying the initial right holder of the video. The frame identifier is an ID of a frame included in a video. The frame may be referred to as a field or a still image. The location information indicates latitude and longitude. The time information indicates a set of year, month, day, hour, minute, and second. The weather information indicates, for example, sunny, rainy, cloudy, and snowy. The temperature information indicates the temperature (°C) outside the movable body. The value of 1 for the accident tag indicates that the tag indicating an occurrence of an accident is applied to the corresponding frame. The value of 1 for the traffic jam tag indicates that the tag indicating an occurrence of a traffic jam is applied to the corresponding frame. The value of 1 for the dangerous driving tag indicates that the tag indicating dangerous driving of a preceding automobile is applied to the corresponding frame. The movement information tag = 1 indicates that a video is currently transmittable from the mobile terminal 2. The movement information tag = 0 indicates that a video is currently not transmittable from the mobile terminal 2, with the power being off, for example. The registration flag = 1 indicates that the video has been registered, and can be obtained from the device with which the video is registered (e.g., the storage 11 or another device). The value of 1 for the availability flag indicates that the video is allowed to be viewed. The value of 2 for the availability flag indicates that the video is allowed to be sold (right holder changes are allowed).

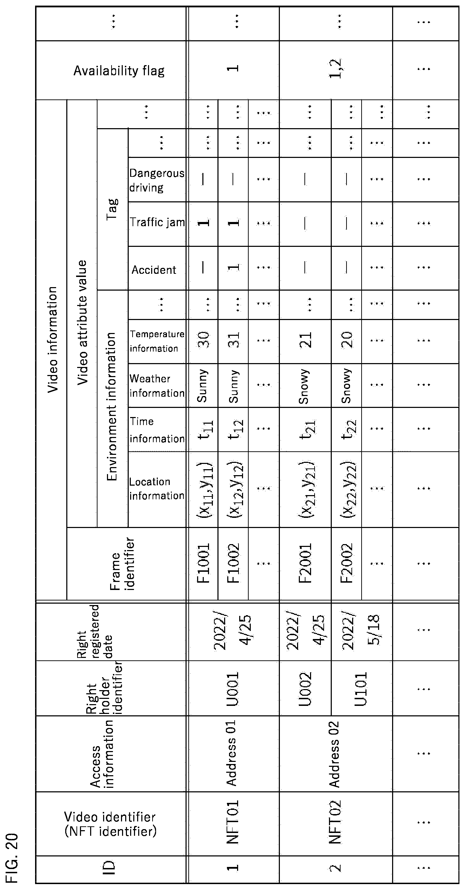

A registered video management table having the structure shown in FIG. 20 is stored on the blockchain. The registered video management table is a table for managing registered videos. The registered videos are, for example, videos provided to users in response to inquiries from the users. For example, the registered videos satisfy a preservation condition. The registered video management table includes an ID, a video identifier, access information, a right holder identifier, right registered date, video information, and an availability flag. The registered videos are stored in the information processor 1, another device, or the blockchain.

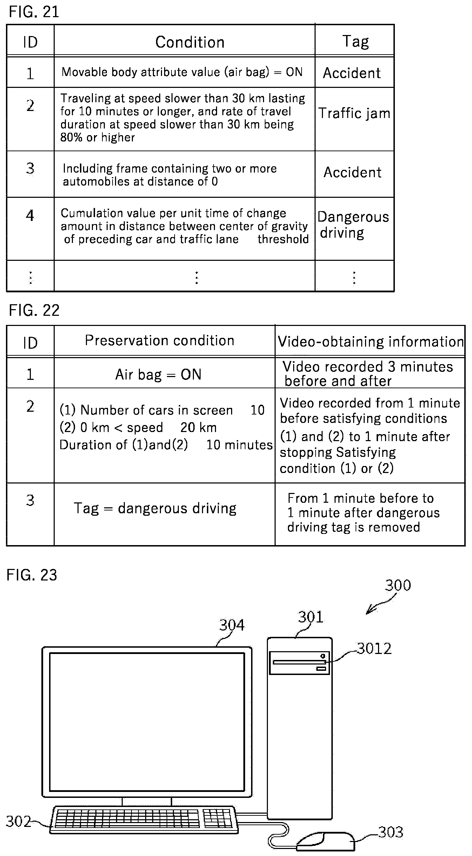

The mobile storage 21 in at least one of the two or more mobile terminals 2 stores a tag condition management table shown in FIG. 21. The storage 11 in the information processor 1 stores the tag condition management table shown in FIG. 21.

The tag condition management table is a table for managing pairs of tags and attribute value tag conditions or pairs of tags and video tag conditions. The tag condition management table includes an ID, a condition, and a tag. The conditions for ID = 1 and ID = 2 are attribute value tag conditions. The condition for ID = 1 is activation of an air bag. The condition for ID = 2 can be determined to be satisfied or not based on the speeds at two or more time-series points. The conditions for ID = 3 and ID = 4 are the video tag conditions. The condition for ID = 3 is satisfied when the outlines of automobiles within a frame are identified and the two outlines have a point of intersection or a point of contact. The condition for ID = 4 can be determined to be satisfied or not by identifying a preceding automobile and a traffic lane, detecting the center of gravity of the automobile, obtaining the distance between the center of gravity and the traffic lane, and calculating the cumulative value of the change in the distance. The conditions may be written in any manner. The conditions may be written in a program.

The mobile storage 21 in each mobile terminal 2 stores the preservation condition management table shown in FIG. 22. When the information processor 1 determines a video to be preserved, the preservation condition management table shown in FIG. 22 is stored in the storage 11 in the information processor 1.

The preservation condition management table is a table for managing one or more preservation conditions. The preservation condition management table is a table for managing records including an ID, a preservation condition, and video-obtaining information. The preservation condition management table in this example includes three records. The video-obtaining information specifies a video to be obtained. The video-obtaining information normally specifies a video including frames that satisfy a preservation condition. The video-obtaining information for ID = 1 indicates that a video recorded three minutes before and after activation of an air bag (for six minutes in total) is to be obtained. The video-obtaining information for ID = 2 indicates that the video to be obtained is a video recorded from one minute before when ten or more cars appear on the screen (condition 1) and when the traveling speed is within 0 to 20 km/h (condition 2) to one minute after when condition 1 or condition 2 is not satisfied. The video-obtaining information for ID = 3 indicates that the video to be obtained is a video including a frame one minute before the frame to which the dangerous driving tag is applied to the frame one minute after the last frame to which the dangerous driving tag is applied. The preservation condition and the video-obtaining information may be written in any manner. The preservation condition and the video-obtaining information may be written in a program.

For the above situations, two specific examples are described below. Specific Example 1 is an example of the rewarding process of rewarding the right holder of a video when a user uses the video. Specific Example 1 includes examples of the first preservation process and the third preservation process of registering a used video. Specific Example 2 includes examples of the second preservation process and the third preservation process of automatically registering videos satisfying a preservation condition.

### Specific Example 1

A user A inputs, into his or her user terminal 3, an inquiry for any accident that has occurred within one hour from the present time around a position X. This inquiry is a request for a video containing any accident that has occurred within one hour from the present time around the position X (within 1 km in this example).

The user terminal 3 then receives the inquiry, and transmits the inquiry to the information processor 1 together with a user identifier U211. The user identifier U211 is stored in the user storage 31.

The inquiry receiver 122 in the information processor 1 then receives the user identifier U211 and the inquiry from the user terminal 3. The video obtainer 133 then refers to FIG. 19 and determines whether the video attribute value of the record having the movement information of 1 or the registration flag of 1 responds to the inquiry. The video corresponding to the record having the movement information of 1 or the registration flag of 1 is an obtainable video.

The video obtainer 133 determines whether the video attribute value of each record in FIG. 19 with the movement information of 1 or the registration flag of 1 responds to the inquiry. More specifically, the video obtainer 133 searches the video attribute values in FIG. 19 and determines whether any record responds to the inquiry. The time information t12 satisfies the condition of within one hour from the present time and the condition of the distance between the position X and the position of the location information (x 12, y 12) ≤ 1 km. More specifically, with the frame identifier F1002 for ID = 1 in FIG. 19 having the accident = 1, the video obtainer 133 determines that the video attribute value paired with the frame identifier F1002 responds to the inquiry. The video obtainer 133 determines that no other records in FIG. 19 respond to the inquiry.

The video obtainer 133 then obtains a right holder identifier U001 corresponding to the record of ID = 1. The video obtainer 133 then transmits, to the mobile terminal 2 identified by the right holder identifier U001, an instruction to transmit all the videos stored in the mobile terminal 2 or a video of a predetermined duration including frames identified by the frame identifier F1002 among the videos stored in the mobile terminal 2.

The mobile terminal 2 then receives the instruction to transmit the video, obtains the video from the mobile storage 21, and transmits the video corresponding to the transmission instruction to the information processor 1 together with the right holder identifier U001.

The receiver 12 in the information processor 1 then receives the right holder identifier U001 and the video from the mobile terminal 2. The changer 1345 then obtains the user identifier U211 of the user terminal 3. The user identifier is to be a new right holder identifier. The changer 1345 associates the user identifier U211 with the record of ID = 1 in FIG. 19.

The first preserver 1341 then determines that the received video is not registered based on the registration flag of 0. The first preserver 1341 then accumulates the video into, for example, the storage 11.

The third preserver 1343 then performs the third preservation process for the video using the user identifier U211 of the user terminal 3. More specifically, the third preserver 1343 obtains access information (e.g., uniform resource locator, or URL) specifying the destination into which the video is accumulated by the first preserver 1341. The third preserver 1343 obtains an attribute value set, or a set of video attribute values of the record of ID = 1 in FIG. 19 corresponding to each of one or more frames included in the received video. The third preserver 1343 generates preservation information including the right holder identifier U001 of the mobile terminal 2, the obtained user identifier U211, the access information, and one or more attribute value sets. The third preserver 1343 then accumulates the preservation information onto the blockchain. An example of the preservation information is a record of ID = 1 in FIG. 20. The NFT identifier of the record of ID = 1 is an ID generated for the preservation information. The availability flag is information managed by the storage 11 in a manner associated with the right holder identifier U001.

The rewarding unit 1344 then performs the rewarding process in the manner described below. The rewarding unit 1344 obtains the right holder identifier U001 of the mobile terminal 2 that has transmitted the video (the identifier of the original right holder).

The rewarding unit 1344 then obtains a reward amount using the video attribute value (e.g., the duration of the video or the accident tag). The rewarding unit 1344 may obtain the reward amount with, for example, a different basis for each tag (e.g., the accident tag or the traffic jam tag). The different basis is, for example, a different arithmetic expression or a different price. The arithmetic expression is, for example, an increasing function using the duration of the video as a parameter.

The rewarding unit 1344 then rewards (provides points) the right holder identified by the obtained right holder identifier U001 at an amount corresponding to the obtained reward.

The rewarding unit 1344 then causes the user (user U211) that has enjoyed the service associated with the target video to pay the reward.

The right holder processor 134 then changes the registration flag of the record of ID = 1 in FIG. 19 to 1.

The video transmitter 141 then transmits the video and a set of one or more video attribute values (a set of video attribute values of the record in FIG. 19) to the user terminal 3.

The user terminal 3 then receives and outputs the video or other information. The user terminal 3 may output the video in any manner.

The user identified by the right holder identifier U001 then turns off the mobile terminal 2 (e.g., turns off the automobile engine). The mobile processor 23 in the mobile terminal 2 then detects the end of movement. The mobile processor 23 then obtains the right holder identifier U001 from the mobile storage 21. The mobile processor 23 then generates the attribute value set of a video in the mobile storage 21 or a video captured after the latest turning on. The set transmitter 243 then transmits the generated attribute value set to the information processor 1 in a manner associated with the right holder identifier.

The mobile processor 23 then determines whether a preservation condition is satisfied. When no preservation condition to be satisfied is identified, the video is not transmitted to the information processor 1.

The receiver 12 in the information processor 1 then receives the attribute value set in a manner associated with the right holder identifier U001. The set accumulator 132 updates video information for the record of ID = 1 in FIG. 19 using the received attribute value set.

The set accumulator 132 sets the movement information for the record of ID = 1 in FIG. 19 to 0. With the above process, the movement information = 0 indicating that a video is not obtainable from the mobile terminal 2 is stored.

In the specific example described above, the right holder of the video transmitted to the user that has input the inquiry can be rewarded. The used video can be accumulated for future use. Further, the preservation information for the used video can be preserved on the blockchain.

### Specific Example 2

A user B starts driving an automobile at the present time. More specifically, the user B has turned on the engine of the automobile. This turns on a drive recorder that is one of the mobile terminals 2 with communication capabilities installed in the automobile.

The mobile processor 23 in the mobile terminal 2 then detects the start of movement. The movement information obtainer 233 then obtains movement information. The movement information transmitter 241 then transmits the movement information to the information processor 1. In this example, the movement information is a right holder identifier U333 of the automobile.

The movement information receiver 121 in the information processor 1 then receives the movement information that is the right holder identifier from the mobile terminal 2, and accumulates the movement information into the storage 11.

When the user B turns on the engine of the automobile, the image capturer 231 in the mobile terminal 2 starts capturing a video. While obtaining the video, the image capturer 231 accumulates the video into the storage 11.

While the video is captured, the mobile processor 23 continuously obtains environment information such as location information, time information, weather information, temperature information, and season information, and associates the environment information with the frame captured when the information is obtained. While the video is captured, the mobile processor 23 obtains a movable body attribute value such as CAN data, and associates the obtained movable body attribute value with the frame captured when the value is obtained. The mobile processor 23 in the mobile terminal 2 of the user B does not include the tag obtainer 232. In other words, in this example, the tag is not obtained based on the video or the movable body attribute value.

While the video is captured, the mobile processor 23 continuously determines whether any video attribute value satisfies any of the conditions in FIG. 21. When detecting any video attribute value satisfying any condition, the mobile processor 23 associates the tag paired with the condition with the frame captured when the video attribute value is detected.

In the present specific example, the mobile processor 23 or another device continuously performs the video transmission process described with reference to FIG. 15.

In this example, the user B has collided with another automobile while driving, and an air bag has activated. The mobile processor 23 in the mobile terminal 2 then obtains a movable body attribute value indicating the air bag = ON. The mobile processor 23 determines that the air bag = ON satisfies the preservation condition for ID = 1 in FIG. 22.

The mobile processor 23 then obtains the video-obtaining information for ID = 1 shown in FIG. 22 indicating that the video is to be recorded three minutes before and after activation of an air bag. During such processing, the image capturer 231 continues capturing a video and accumulates the video into the storage 11. During such processing, the mobile processor 23 obtains an attribute value set including many pieces of environment information and many movable body attribute values, and associates the attribute value set with the corresponding frame in the video. The process of associating the attribute value set with the corresponding frame is associating the attribute value set with the frame captured at the timing when the attribute value set is obtained and accumulating the frame into the mobile storage 21.

Three minutes have passed after the activation of the air bag.

The mobile processor 23 then obtains, as indicated by the video-obtaining information indicating that the video is to be recorded three minutes before and after activation of an air bag, the video recorded three minutes before and after the activation of the air bag and one or more attribute value sets associated with the video from the mobile storage 21. When two or more attribute value sets are obtained, the attribute value sets are time-series attribute value sets. The mobile processor 23 obtains the right holder identifier U333 of the user B from the mobile storage 21.

The mobile video transmitter 242 then transmits the right holder identifier, the obtained six-minute video, and the attribute value set associated with each of one or more frames included in the video to the information processor 1.

The receiver 12 in the information processor 1 then receives, from the mobile terminal 2, the right holder identifier U333, the six-minute video, and the time-series attribute value sets.

Using the table in FIG. 21, the set accumulator 132 then performs the process similar to the process performed by the tag obtainer 232 described above (performs the processes described with reference to FIGs. 6 and 7) to apply, to the frames or the videos satisfying the condition, the tag paired with the condition. The set accumulator 132 applies the tag to the attribute value set at the same timing.

The set accumulator 132 generates one or more attribute value sets including the received time-series attribute value sets and the obtained tag. The set accumulator 132 generates an attribute value set also including the received right holder identifier.

The second preserver 1342 then accumulates the received six-minute video in a manner associated with the obtained attribute value set. The video is accumulated into, for example, the storage 11, but may be accumulated onto a blockchain.

The third preserver 1343 then performs the third preservation process in the manner below. More specifically, the third preserver 1343 obtains access information specifying the destination into which the video is accumulated. The third preserver 1343 then obtains the generated attribute value set. The third preserver 1343 then generates preservation information including the access information, the attribute value set, and the right holder identifier U333 of the video. The third preserver 1343 then accumulates the generated preservation information onto, for example, a blockchain. The preservation information is additionally written into the table in FIG. 20 as a new record.

Accumulating information onto the blockchain is accumulating information into a distributed ledger.

In the present specific example, videos satisfying the preservation condition can be automatically registered as described above. The preservation information about the automatically registered video can be preserved.

The structure in the present embodiment allows appropriate processing for the right holder of a video captured with a mobile terminal. The appropriate processing for the right holder is, for example, the rewarding process, the change process, the first preservation process, the second preservation process, or the third preservation process described above.

The structure in the present embodiment allows appropriate processing for the right holder of a video satisfying an accumulation condition.

The structure in the present embodiment allows appropriate processing for the right holder of a video corresponding to an inquiry from a user.

The structure in the present embodiment allows appropriate processing for the right holder of a video satisfying a preservation condition.

The structure in the present embodiment can manage the history of right holder changes of a video captured with a mobile terminal.

The structure in the present embodiment can associate, with a video, an attribute value set including tags specifying the features in the video.

The structure in the present embodiment can search for a requested video using the attribute value sets of videos stored in the information processor 1 and can determine the requested video promptly.

When any mobile terminal 2 possesses a video requested by a user, but is in a state of being unable to transmit the video, the structure in the present embodiment can notify the user that the mobile terminal 2 is in the state of being unable to transmit the video.

When any mobile terminal 2 possesses a video requested by a user, but is in a state of being unable to transmit the video, the structure in the present embodiment can notify the user, such as the right holder of the video, of the request for the video.

The structure in the present embodiment can receive and accumulate the latest attribute value set of a video at the end of movement of a mobile terminal.

The structure in the present embodiment can perform a process for obtaining a video from a mobile terminal 2 in the state of being able to transmit the video.

The structure in the present embodiment can transmit, at the start of movement of a mobile terminal, the movement information specifying the movement of the mobile terminal 2 to the information processor 1.

The structure in the present embodiment can transmit, at the end of movement of a mobile terminal 2, the attribute value set of a video stored in the mobile terminal 2 to the information processor 1.

Further, the structure in the present embodiment can automatically obtain a tag for a video captured with each mobile terminal 2.

In the present embodiment, the movable body in which a mobile terminal 2 is installed is mainly an automobile, but may be, for example, a two-wheeled vehicle, a bicycle, a ship or boat, an airplane, a person, or an animal.

The processes in the present embodiment may be implemented with software. The software may be distributed by, for example, downloading. The software may be recorded in a recording medium such as a compact disk read-only memory (CD-ROM) for distribution. The same applies to another embodiment herein. The software for implementing the information processor 1 according to the present embodiment is a program described below. The program causes a computer to function as a video obtainer that obtains, of videos captured with two or more mobile terminals, a video captured with and transmitted from a mobile terminal of the two or more mobile terminals. The videos are each associated with an attribute value set and a right holder identifier. The attribute value set includes one or more pieces of environment information including location information specifying a location at which the video is captured. The program causes the computer to function as a video transmitter that transmits the video obtained by the video obtainer to a user terminal, and a right holder processor that performs a right holder process for a right holder identified by the right holder identifier associated with the video.

The software for implementing each mobile terminal 2 in the present embodiment is a program described below. The program causes a computer that can access a mobile storage that stores an attribute value set including one or more pieces of environment information including location information specifying a location at which a video is captured to function as an image capturer that captures a video, a terminal accumulator that obtains the attribute value set while the image capturer is capturing the video and accumulates the attribute value set into the mobile storage in a manner associated with the video, and a set transmitter that transmits the attribute value set in the terminal storage to an information processor at an end of movement of a mobile terminal.

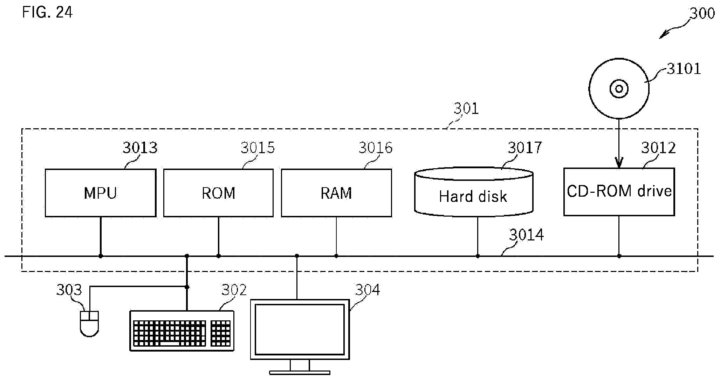

FIG. 23 shows the external appearance of a computer that executes the program described herein to implement, for example, the information processor 1 and each mobile terminal 2 according to the various embodiments described above. The embodiments described above can be implemented with computer hardware and a computer program executed on the computer hardware. FIG. 23 is a schematic diagram of a computer system 300, and FIG. 24 is a block diagram of the system 300.

In FIG. 23, the computer system 300 includes a computer 301 including a CD-ROM drive, a keyboard 302, a mouse 303, and a monitor 304.

In FIG. 24, the computer 301 includes a CD-ROM drive 3012, a microprocessor unit (MPU) 3013, a bus 3014 connected to, for example, the CD-ROM drive 3012, a read-only memory (ROM) 3015 storing programs including a boot-up program, a RAM 3016 connected to the MPU 3013, temporary storing a command from an application program, and providing a temporarily storing space, and a hard disk 3017 storing the application program, a system program, and data. Although not shown in the figure, the computer 301 may include a network card that allows connection to a local area network (LAN).

A program that causes the computer system 300 to function as, for example, the information processor 1 according to the above embodiment may be stored in a CD-ROM 3101. The CD-ROM 3101 may be inserted into the CD-ROM drive 3012 and may be transferred to the hard disk 3017. The program may instead be transmitted to the computer 301 through a network (not shown) and stored in the hard disk 3017. The program is loaded on the RAM 3016 when executed. The program may be directly loaded from the CD-ROM 3101 or the network.

The programs may or may not include, for example, a third party program or an operation system (OS) that causes the computer 301 to function as, for example, the information processor 1 according to the above embodiment. The programs may be any program that includes a command to call an appropriate function (module) in a controlled manner and obtain an intended result. The manner in which the computer system 300 operates is known, and is thus not described in detail.

The steps in the above program, such as transmitting or receiving information, do not include processing performed by hardware, or for example, processing performed by a modem or an interface card in the transmission step (processing performed by hardware alone).

One or more computers may execute the above program. More specifically, either integrated processing or distributed processing may be performed.

In each of the above embodiments, two or more communicators included in a single device may be implemented by a single physical medium.

In each of the embodiments, each process may be performed by a single device through integrated processing or by multiple devices through distributed processing.

The present invention is not limited to the above embodiments, but may be modified variously within the scope of the present invention.

### INDUSTRIAL APPLICABILITY

As described above, the information processor 1 according to one or more embodiments of the present invention can perform appropriate processing for the right holder of a video captured with a mobile terminal, and is useful as, for example, a server that provides videos.

## Claims

1. An information processor, comprising:
an inquiry receiver configured to receive, from a user terminal, an inquiry about environment information about environments in which videos are captured with two or more mobile terminals;
a video obtainer configured to obtain, of the videos captured with the two or more mobile terminals, a video captured with and transmitted from a mobile terminal of the two or more mobile terminals, the video corresponding to the inquiry and satisfying an accumulation condition, each of the videos being associated with an attribute value set and a right holder identifier, the attribute value set including one or more pieces of environment information, the environment information including location information specifying a location at which the video is captured;
a video transmitter configured to transmit the video obtained by the video obtainer; and
a right holder processor configured to perform a right holder process for a right holder identified by the right holder identifier associated with the video.

2. The information processor according to claim 1, wherein
the right holder processor includes a changer configured to change the right holder of the video identified by the right holder identifier associated with the video to a user of the user terminal.

3. The information processor according to claim 2, wherein
the changer adds a user identifier identifying the user of the user terminal in a manner associated with the right holder identifier associated with the video transmitted by the video transmitter.

4. The information processor according to claim 1, wherein
in response to the inquiry receiver receiving the inquiry, the video obtainer obtains the video corresponding to the inquiry from the mobile terminal, and
the right holder processor includes a first preserver configured to accumulate the video obtained by the video obtainer in a manner associated with the attribute value set.

5. The information processor according to claim 1, wherein
the video obtainer obtains a video associated with an attribute value set satisfying a preservation condition from a mobile terminal of the two or more mobile terminals.

6. The information processor according to claim 1, wherein
the right holder processor includes a rewarding unit configured to reward the right holder identified by the right holder identifier associated with the video transmitted by the video transmitter.

7. The information processor according to claim 1, wherein
the video obtainer obtains a video associated with an attribute value set satisfying a preservation condition from a mobile terminal of the two or more mobile terminals, and
the right holder processor includes a second preserver configured to accumulate the video obtained by the video obtainer in a manner associated with the attribute value set.

8. The information processor according to claim 1, wherein
the right holder processor includes a third preserver configured to accumulate preservation information onto a blockchain, and the preservation information includes access information for accessing accumulated videos.

9. The information processor according to any one of claims 1 to 8, wherein
the attribute value set includes one or more tags specifying features in the video.

10. The information processor according to claim 1, further comprising:
a set storage configured to store the attribute value set in a manner associated with one or more terminal identifiers identifying each of the two or more mobile terminals,
wherein the video obtainer refers to the set storage, determines a video corresponding to the inquiry, and obtains the video from a mobile terminal of the two or more mobile terminals.

11. The information processor according to claim 10, wherein
the video obtainer refers to the set storage, determines a video corresponding to the inquiry, determines whether the video is transmittable from a mobile terminal of the two or more mobile terminals, and obtains the video from the mobile terminal in response to the video being transmittable, and
the information processor further comprises a state transmitter configured to transmit, in response to the video obtainer determining that the video is not transmittable, state information indicating that the video is not transmittable to the user terminal.

12. The information processor according to claim 10, wherein
the video obtainer refers to the set storage, determines a video corresponding to the inquiry, determines whether the video is transmittable from a mobile terminal of the two or more mobile terminals, and obtains the video from the mobile terminal in response to the video being transmittable, and
the information processor further comprises a request transmitter configured to transmit, in response to the video obtainer determining that the video is not transmittable, request information indicating a request for the video to a user corresponding to the video.

13. The information processor according to claim 10, further comprising:
a set receiver configured to receive the attribute value set from each of the two or more mobile terminals at an end of movement of the mobile terminal; and
a set accumulator configured to accumulate the attribute value set received by the set receiver into the set storage.

14. The information processor according to claim 1, further comprising:
a movement information receiver configured to receive, at a start of movement of each of the two or more mobile terminals, movement information specifying the movement of the mobile terminal from the mobile terminal; and
a movement information accumulator configured to accumulate the movement information received by the movement information receiver in a manner associated with the mobile terminal,
wherein the video obtainer obtains a video corresponding to the inquiry among videos captured with at least one of the two or more mobile terminals corresponding to the movement information.

15. An information processing method implementable with an inquiry receiver, a video obtainer, a video transmitter, and a right holder processor, the method comprising:
receiving, with the inquiry receiver, an inquiry from a user terminal, the inquiry being about environment information about environments in which videos are captured with two or more mobile terminals;
obtaining, with the video obtainer, of the videos captured with the two or more mobile terminals, a video captured with and transmitted from a mobile terminal of the two or more mobile terminals, the video corresponding to the inquiry and satisfying an accumulation condition, each of the videos being associated with an attribute value set and a right holder identifier, the attribute value set including one or more pieces of environment information, the environment information including location information specifying a location at which the video is captured;
transmitting, with the video transmitter, the obtained video; and
performing, with the right holder processor, a right holder process for a right holder identified by the right holder identifier associated with the video.
